# EUROPEAN PATENT SPECIFICATION

(11) **EP 1 433 051 B1**
(45) Date of publication and mention of the grant of the patent: **20.01.2016**
(21) Application number: 02763625.7
(22) Date of filing: 10.09.2002
(51) Int. Cl.: H04L 12/26, H04L 29/08, H04L 29/12, G06F 9/50, H04L 12/701, H04L 12/727, H04L 12/733

(54) **SYSTEM AND METHOD FOR INFORMATION OBJECT ROUTING IN COMPUTER NETWORKS**
SYSTEM UND VERFAHREN ZUM INFORMATIONSOBJEKT-ROUTING IN COMPUTERNETZWERKEN
SYSTEME ET PROCEDE DE ROUTAGE D'OBJET D'INFORMATION DANS DES RESEAUX INFORMATIQUES

(30) Priority: 10.09.2001 US 323126 P; 10.09.2001 US 322899 P
(43) Date of publication of application: 30.06.2004
(73) Proprietor: Adara Networks, Inc., San Jose, CA 95110 (US)
(72) Inventor: RAJU, Jyoti, San Jose, CA 95118 (US); GARCIA-LUNA-ACEVES, J., J., San Mateo, CA 94402 (US); SMITH, Bradley, R., Santa Cruz, CA 95065 (US)
(74) Representative: Boult Wade Tennant
(86) International application number: PCT/US2002/028961
(87) International publication number: WO 2003/023607

(56) References cited:
- EP-A2- 1 017 204
- WO-A1-98/26559
- WO-A1-99/06913
- WO-A2-01/69457
- US-A- 5 774 668
- US-A- 6 052 718
- US-A- 6 115 752
- US-B1- 6 205 481
- US-B1- 6 256 675
- US-B1- 6 298 381

## Description

### FIELD OF THE INVENTION

The present invention relates to a system and method for directing a client (i.e., an information requesting application such as a Web browser) to an optimal content source such as a cache or server (i.e., information object repository) among many available content repositories for servicing of a request for one or more information objects or services.

### BACKGROUND

An internetwork is a collection of computer networks interconnected by nodes, each such node may be a general-purpose computer or a specialized device, such as a router. As such, an internetwork is often called a network of networks. The purpose of building an internetwork is to provide information services to end nodes, each end node may be a general-purpose computer or a specialized device, such as a camera or a display. The Internet is an internetwork in which information is organized into packets to be distributed on a store-and forward manner from source to destination end nodes, and in which routers and end nodes use the Internet Protocol (IP) to communicate such packets.

The World Wide Web (also known as WWW or Web) has become an essential information service in the Internet. The Web constitutes a system for accessing linked information objects stored in end nodes (host computers) all over the Internet. Berners-Lee wrote the original proposal for a Web of linked information objects (T. Berners-Lee,

"Information Management: A Proposal," CERN Document, March 1989). The Web consists of a vast collection of information objects organized as pages, and each page may contain links to other pages or, more generally, information objects with which content is rendered as audio, video, images, text or data. Pages are viewed by an end user with a program called a browser (e.g., Netscape Navigator™). The Web browser runs in an end system at the user premises. The client (Web browser) obtains the required information objects from a server (Web server) using a request-response dialogue as part of the Hypertext Transfer Protocol (HTTP). Information objects are identified by means of names that are unique throughout the Internet; these names are called Uniform Resource Locators or URLs. A URL consists of three components:
(1) the protocol or scheme to be used for accessing the object (e.g., http);
(2) the name (a DNS name) of the host on which the object is located; and
(3) a local identifier that is unique in the specified host.

Like any large-scale system, the Web requires the use of mechanisms for scaling and reliability. More specifically, as the number of information objects that can be obtained through the Web increases, people find it more difficult to locate the specific information objects they need. Furthermore, as the number of Web users and servers increase, the sites or servers that store the requested information objects may be very far from the users requesting the objects, which leads to long latencies in the access and delivery of information, or the servers storing the information objects may be overwhelmed with the number of requests for popular information objects.

To enable the Web to scale to support large and rapidly increasing numbers of users and a vast and growing collection of information objects, the information objects in the Web must be stored distributedly at multiple servers, in a way that users can retrieve the information objects they need quickly and without overwhelming any one of the servers storing the objects. Accordingly, distributing information objects among multiple sites is necessary for the Web to scale and be reliable. The schemes used to accomplish this are called Web caching schemes. In a Web caching scheme, one or multiple Web caches or proxy Web servers are used in computer networks and the Internet to permit multiple host computers (clients) to access a set of information objects from sites other than the sites from which the content (objects) are provided originally. Web caching schemes support discovering the sites where information objects are stored, distributing information objects among the Web caches, and retrieving information objects from a given Web cache. The many proposals and implementations to date differ on the specific mechanisms used to support each of these services.

Many methods exist in the prior art for determining the server, cache, mirror server, or proxy from which information objects should be retrieved. The prior art dates to the development of the ARPANET in the 1970s and the study and implementation of methods to solve the file allocation problem (FAP) for databases distributed over the ARPANET and computer networks in general.

File allocation methods for distributed databases (e.g., W.W. Chu, "Optimal File Allocation in a Multiple Computer System," IEEE Transactions on Computers, October 1969; S. Mahmoud and J.S. Riordon, "Optimal Allocation of Resources in Distributed Information Networks," ACM Transactions on Data Base Systems, Vol. 1, No. 1,

March 1976; H.L. Morgan and K.D. Levin, "Optimal Program and Data Locations in Computer Networks," Communications of the ACM, Vol. 20, No. 5, May 1977) and directory systems (e.g., W.W. Chu, "Performance of File Directory Systems for Data Bases in Star and Distributed Networks," Proc. National Computer Conference, 1976, pp. 577-587; D. Small and W.W. Chu, "A Distributed Data Base Architecture for Data Processing in a Dynamic Environment," Proc. COMPCON 79 Spring) constitute some of the earliest embodiments of methods used to select a delivery site for accessing a file or information object that can be replicated at a number of sites.

Another example of this prior art is the method described by Chiu, Raghavendra and Ng (G. Chiu, C.S. Rahgavendra, and S.M. Ng, "Resource Allocation with Load Balancing Consideration in Distributed Computing Systems," Proc. IEEE INFOCOM 89, Ottawa, Ontario, Canada, April 1989, pp. 758-765). According to this method, several identical copies of the same resource (e.g., a file, an information object) are allocated over a number of processing sites (e.g., a mirror server, a cache) of a distributed computing system. The method attempts to minimize the cost incurred in replicating the resource at the processing sites and retrieving the resource by users of the system from the processing sites.

Several different approaches exist in the prior art for discovering information objects in Web caching schemes. Recent work has addressed the same resource allocation and discovery problems within the context of Internet services. Guyton and Schwartz (J.D. Guyton and M.F. Schwartz, "Locating Nearby Copies of Replicated Internet Servers," Technical Report CU-CS-762-95, Department of Computer Science, University of Colorado-Boulder, February 1995; Proc. ACM SIGCOMM 95 Conference, Cambridge, Massachusetts, August 1995, pp. 288-298) describe and analyze server location techniques for replicated Internet services, such as Network Time Protocol (NTP) servers and Web caches. Guyton and Schwartz propose gathering location data with router support in two ways. In one method, routers advertise the existence or absence of replicated servers as part of their normal routing exchanges involving network topological information. Routers examine a distance metric for the advertised servers in a way that each router retains knowledge of at least the nearest servers. In this way, each router in an internetwork has enough knowledge to direct client requests to the nearest servers, without necessarily having to maintain knowledge of all the servers in the internetwork. In another method, servers poll routers for the content of their routing tables. Guyton and Schwartz also describe a method for gathering location data using routing probes without router support by means of measurement servers. According to this method, measurement servers explore the routes to the replicated servers providing services and content to clients. When a client asks a measurement server for a list of nearby servers from which to request a service, the measurement server takes into account the route back to the client in deciding the list of servers that appear closer to the client.

One approach to object discovery consists in organizing Web caches hierarchically. In a hierarchical Web cache architecture, a parent-child relationship is established among caches; each cache in the hierarchy is shared by a group of clients or a set of children caches. A request for an information object from a client is processed at a lowest-level cache, which either has a copy of the requested object, or asks each of its siblings in the hierarchy for the object and forwards the request to its parent cache if no sibling has a copy of the object. The process continues up the hierarchy, until a copy of the object is located at a cache or the root of the hierarchy is reached, which consists of the servers with the original copy of the object.

One of the earliest examples of hierarchical Web caching was the Discover system (A. Duda and M.A. Sheldon, "Content Routing in Networks of WAIS Servers," Proc. IEEE 14th International Conference on Distributed Computing Systems, June 1994; M.A. Sheldon, A. Duda, R. Weiss, J.W. O'Toole, Jr., and D.K. Gifford, "A Content Routing System for Distributed Information Servers," Proc. Fourth International Conference on Extending Database Technology, March 1994), which provides associative access to servers; the user guides the refinement of requests.

Harvest (A. Chankhunthod, P. Danzing, C. Neerdaels, M. Schwartz, and K. Worrell, "A Hierarchical Internet Object Cache," Proc. USENIX Technical Conference 96, San Diego, California, January 1996) and Squid (D. Wessels, "Squid Internet Object Cache," http:// www.squid.org, August 1998) are two of the best known hierarchical Web cache architectures. Harvest and Squid configure Web caches into a static hierarchical structure in which a Web cache has a static set of siblings and a parent. The Internet Caching Protocol or ICP (D. Wessels and K. Claffy, "Internet Cache Protocol (ICP), Version 2," RFC 2186, September 1997) is used among Web caches to request information objects.

In the Harvest hierarchies, siblings and parents are configured manually in Web caches or proxies; this is very limiting and error prone, because reconfiguration must occur when a cache enters or leaves the system. A more general limitation of hierarchical Web caching based on static hierarchies is that the delays incurred in routing requests for information objects can become excessive in a large-scale system, and the latency of retrieving the information object from the cache with a copy of the object can be long, because there is no correlation between the routing of the request to a given cache in the hierarchy and the network delay from that cache to the requesting client. Furthermore, some Web caches may be overloaded with requests while others may be underutilized, even if they store the same objects.

In the WebWave protocol (A. Heddaya and S. Mirdad, "WebWave: Globally Load Balanced Fully Distributed Caching of Hot Published Documents," Technical Report BU-CS-96-024, Boston University, Computer Science Department, October 1996; A. Heddaya and S. Mirdad, "WebWave: Globally Load Balanced Fully Distributed Caching of Hot Published Documents," Proc. IEEE 17th International Conference on Distributed Computing Systems, Baltimore, Maryland, May 1997) Web caches are organized as a tree rooted at the server that provides the original copy of one object or a family of information objects; the leaves of the tree are the clients requesting the information objects, and the rest of the nodes in the tree are Web caches. The objective of the protocol is to achieve load balancing among Web caches; each Web cache in such a tree maintains a measurement of the load at its parent and children in the tree, and services or forwards the request to its parent automatically based on the load information. This approach reduces the possibility of overloading Web caches as in the Harvest approach to hierarchical Web caching; however, delays are still incurred in the propagation of requests from heavily loaded Web caches to their ancestors in the Web hierarchy.

Hash routing protocols (K.W. Ross, "Hash Routing for Collections of Shared Web Caches," IEEE Network, Vol. 11, No. 6, November 1997, pp 37-44) constitute another approach to support object discovery in shared caches. Hash routing protocols are based on a deterministic hashing approach for mapping an information object to a unique cache (D.G. Thaler and C.V. Ravishankar, "Using Name-Based Mappings To Increase Hit," IEEE/ACM Trans. Networking, 1998; V. Valloppillil and J. Cohen, "Hierarchical HTTP Routing Protocol," Internet Draft, http://www.nlanr.net/Cache/ICP/draft-vinod-icp-traffic-dist-00.txt) to distribute the information objects (universal resource locator or URL in the case of the Web) among a number of caches; the end result is the creation of a single logical cache distributed over many physical caches. An important characteristics of this scheme is that information objects are not replicated among the cache sites. The hash function can be stored at the clients or the cache sites. The hash space is partitioned among the N cache sites. when a client requires access to an information object o, the value of the hash function for o, h(o), is calculated at the client or at a cache site (in the latter case the cache would be configured at the client, for example). The value of h(o) is the address of the cache site to contact in order to access the information object o.

The Cache Resolver is another recent approach to hierarchical Web caching (D. Karger, E. Lehman, T. Leighton, M. Levine, D. Lewin, and R. Panigrahy, "Consistent Hashing and Random Trees: Distributed Caching Protocols for Relieving Hot Spots on the World Wide Web," Proc. 29th ACM Symposium on Theory of Computing (STOC 97), El Paso, Texas, 1997; D. Karger, Sherman, A. Berkheimer, B. Bogstad, R. Dhanidina, K. Iwamoto, B. Kim, L. Matkins, and Y. Yerushalmi, "Web Caching with Consistent Hashing," Proc. 8th International World Wide Web Conference, Toronto, Canada, May 1999). This approach combines hierarchical Web caching with hashing and consists of two main tools, random cache trees and consistent hashing. A tree of Web caches is defined for each information object. When a browser (client) requires an information object, it picks a leaf of the tree and submits a request containing its identifier, the identifier of the object, the sequence of caches through which the request is to be routed if needed. A Web cache receiving a request, it determines if it has a local copy of the page and responds to the request if it does; otherwise, it forwards the request to the next Web cache in the path included in the request.

A Web cache starts maintaining a local copy of an information object when the number of requests it receives for the object reaches a predefined number. A client selects a Web cache by means of consistent hashing, which disseminates requests to leaves of the Web caching hierarchy evenly but, unlike traditional hashing techniques, need not redistribute an updated hash table every time a change occurs in the caching hierarchy (e.g., a new Web cache joins or a Web cache fails). Because caching is difficult to implement or add to existing Web browsers, the Cache Resolver approach implements the hashing in DNS servers modified to fit this purpose.

The remaining limitations with this approach stem from the continuing use of a hierarchy of Web caches and the need to implement a hashing function in either Web clients or DNS servers. Routing a request through multiple Web caches can incur substantial delays for clients to retrieve information objects that are not popular among other clients assigned to the same Web cache by the hashing function. Additional delays, even if small, are incurred at the DNS server that has to provide the address of the Web cache that the client should access. Furthermore, the DNS servers supporting the consistent hashing function must receive information about the loading of all the Web caches in the entire system, or at least a region of the system, in order to make accurate load-balancing decisions.

This DNS-based approach, without the use of hierarchies of Web caches, is advocated in the Akamai CDN solution (F.T. Leighton and D.M. Lewin, "Global Hosting System," U.S. Patent 6,108,703, August 22, 2000). The "global hosting system" advocated by Akamai assumes that a content provider services an HTML document in which special URLs specifying a domain name specific to Akamai. When the client needs to obtain the IP address of the Web cache hosting the content specified in the special URL, the client first contacts its local DNS. The local DNS is pointed to a "top-level" DNS server that points the local DNS to a regional DNS server that appears close to the local DNS. The regional DNS server uses a hashing function to resolve the domain name in the special URL into the address of a Web cache (hosting server) in its region, which is referred to as the target Web cache in the present application, in a way that the load among Web caches in the region is balanced. The local DNS passes the address of that Web cache to the client, which in turn sends its request for the information object to that Web cache. If the object resides in the target Web cache, the cache sends the object to the client; otherwise, the object is retrieved from the original content site.

The global hosting system advocated by Akamai was intended to address problems associated with traditional load-balanced mirroring solutions in which a load balancer or a hierarchy of load balancers redirect requests to one of a few hosting sites to balance the load among such sites. Companies such as Cisco Systems of Santa Clara, CA, F5 Networks, Inc. of Seattle, WA, Resonate, Inc. of Sunnyvale, CA, Nortel Networks of Brampton, Ontario, and Foundry Networks, Inc. of San Jose, CA currently provide examples of load-balanced solutions. The limitations of the global hosting system are inherent to the fact that the approach is, in essence, a DNS-based load-balanced mirroring solution. The global hosting system selects a target Web cache based entirely on the region that appears to favor the local DNS, which need not favor the client itself, and balances the load among Web caches without taking into account the latency between the Web caches and the clients. In the case of a cache miss, the information object has to be retrieved from the original content site, which means that latencies in the delivery of content can vary widely, unless the content is mirrored in all the caches of all regions.

Another alternative approach to hierarchical web caching and hash routing protocols consists of forwarding client requests for URLs using routing tables that are very similar to the routing tables used today for the routing of IP packets in the Internet (L. Zhang, S. Michel, S. Floyd, and V. Jacobson, "Adaptive Web Caching: Towards a New Global Caching Architecture," Proc. Third International WWW Caching Workshop, Manchester, England, June 1998, B.S. Michel, K. Nikoloudakis, P. Reiher, and L. Zhang, "URL Forwarding and Compression in Adaptive Web Caching," Proc. IEEE Infocom 2000, Tel Aviv, Israel, April 2000). According to this approach, which is referred to as "URL request forwarding" herein, Web caches maintain a "URL request routing table" and use it to decide how to forward URL requests to another Web caches when requested information objects are not found locally. The keys of the URL request routing tables are URL prefixes, which are associated with one ore more identifiers to the next-hop Web caches or cache groups, and a metric reflecting the average delay to retrieve a request from a matching URL.

In this approach, an entry in the URL request routing table specifies a URL prefix and the next-hop Web cache towards an area or neighborhood of Web caches where the object resides. Ideally, a Web cache needs to know where a copy of a given object resides; however, because of the large number of objects (identified by URLs) that can be requested in a system, the URL request forwarding approach requires Web caches to be organized into areas or neighborhoods. All Web caches within the same area know the objects available in every other Web cache in the same area. In addition, for those objects that are not found in the area of a Web cache, the Web cache also maintains the next-hop Web cache towards the area in which a Web cache with the content resides.

Unfortunately, this approach has several scaling and performance limitations. First, requiring each Web cache to know all the Web caches where each object in the area resides incurs a large overhead, which is akin to the overhead of a traditional topology-broadcast protocol for IP routing, with the added disadvantage that the number of objects that can reside in an area can be much larger than the number of IP address ranges maintained in backbone routers of the Internet. Second, because Web caches only know about the next hop towards a URL that does not reside in a region, a request for an object that lies outside the area of a Web cache may traverse multiple Web-cache hops before reaching a Web cache in the area where an object is stored. This introduces additional latencies akin to those incurred in the caching hierarchies proposed in other schemes discussed above. Third, it is difficult to modify Web caches in practice to implement the mechanisms needed for the forwarding of URL requests.

To reduce the delays incurred in hierarchical Web caches, Tewari, Dahlin, Vin and Kay (R. Tewari, "Architectures and Algorithms for Scalable Wide-area Information Systems," Ph.D. Dissertation, Chapter 5, Computer Science Department, University of Texas at Austin, August 1998; R. Tewari, M. Dahlin, H.M. Vin, and J.S. Kay, "Design Considerations for Distributed Caching on the Internet," Proc. IEEE 19th International Conference on Distributed Computing Systems, May 1999) introduce hint caches within the context of a hierarchical Web caching architecture. According to this scheme, a Web cache maintains or has access to a local hint cache that maintains a mapping of an object to the identifier of another Web cache that has a copy of the object and is closest to the local hint cache. Web caches at the first level of the hierarchy maintain copies of information objects, while Web caches at higher levels only maintain hints to the objects. Hints are propagated along the hierarchy topology from the Web caches lower in the hierarchy to Web caches higher in the hierarchy. Furthermore, a Web cache with a copy of an object does not propagate a hint for the object. The limitation with this approach is that a Web caching hierarchy must still be established, which needs to be done manually in the absence of an automated method to establish the hierarchy, and the Web caching hierarchy must match the locality of reference by clients to reduce control overhead.

A number of proposals exist to expedite the dissemination of information objects using what is called "push distribution" and exemplified by Backweb, marimba and Pointcast ("BackWeb: http://www.backweb.com/'"; "'Marimba: http://www.marimba.com/"'; "Pointcast: http://www.pointcast.com/"'). According to this approach, a Web server pushes the most recent version of a document or information object to a group of subscribers. The popular Internet browsers, Netscape Navigator and Internet Explorer™, use a unicast approach in which the client receives the requested object directly from the originating source or a cache. As the number of subscribers of a document or information object increases, the unicast approach becomes inefficient because of processing overhead at servers and proxies and traffic overhead in the network. The obvious approach to make push distribution scale with the number of subscribers consists of using multicast technology. According to this approach (P. Rodriguez and E.W. Briesack, "Continuous Multicast Push of Web Documents over The Internet," IEEE Network Magazine, Vol. 12, No. 2, pp. 18-31, 1998), a document is multicasted continuously and reliably within a multicast group. A multicast group is defined for a given Web document and subscribers join the multicast group of the Web document they need to start receiving the updates to the document. A multicast group consists of the set of group members that should receive information sent to the group by one or multiple sources of the multicast group. The main shortcoming of this particular approach to push distribution are:

The portion of the Internet where subscribers are located must support multicast routing distribution. A multicast address and group must be used for each Web document that is to be pushed to subscribers, which becomes difficult to manage as the number of documents to be pushed increases. Furthermore, Rodriguez, Biersack, and Ross (P. Rodriguez, E.W. Biersack, and K.W. Ross, "Improving The Latency in The Web: Caching or Multicast?," Proc. Third WWW Caching workshop, Manchester, UK, June 1998) have shown that multicasting Web documents is an attractive alternative to hierarchical Web caching only when the documents to be pushed are very popular, caching distribution incurs less latency.

Kenner and Karush (B. Kenner and A. Karush, "System and Method for Optimized Storage and retrieval of Data on a Distributed Computer Network," U.S. Patent No. 6,003,030, December 14, 1999) propose a method for expediting the delivery of information objects to end users. In this method, the end user site is equipped with special software in addition to the Web browser. This software consists of a configuration utility and a client program. The configuration utility is used to download a delivery site file specifying a list of the delivery sites (Web caches or originating Web servers) from which the information objects can be retrieved and a suite of tests that can be run to determine which delivery site to contact. The limitations with this approach stem from the fact that it is not transparent to end user sites. In particular, the end user site needs to run additional software; performance tests must be conducted from the end-user site to one or more delivery sites to decide which site to use; and when changes occur to the delivery sites, a new version of the delivery site file must be retrieved by the end-user site, or new performance tests must be conducted.

Another approach to helping select servers in a computer network (Z. Fei, S. Bhattacharjee, E.W. Zegura, and M.H. Ammar,"A Novel Server Selection Technique for Improving The Response Time of a Replicated Service" Proc. IEEE Infocom 98, March 1998, pp. 783-791) consists of broadcasting server loading information after a certain load threshold or time period is exceeded. The limitation of this approach is that, just as with topology-broadcast protocols used for routing in computer networks, the scheme incurs substantial overhead as the number of servers increases.

Another recent approach to directing clients to hosting sites with requested information objects or services is the replica routing approach proposed by Sightpath, Inc. (D.K. Gifford, "Replica Routing," U.S. Patent No. 6,052,718, April 18, 2000). According to the Replica Routing approach, an information object or service is replicated in a number of replica servers. The replica routing system redirects a client requesting the information object or service to a "nearby" replica of the object or service. In one approach, all replica routers know the replica advertisements from each of the replica servers in the system, which summarize information about their location and observations about the local internetwork topology and performance. Using this flooding of advertisements, a replica router discerns which replica server appears nearby any one client. However, requiring each replica router to receive the advertisements from every other replica server becomes impractical as the number of replica servers and replica routers increases.

To remedy this problem, replica routers are organized into a hierarchy, and replica advertisements are propagated only part way up such router hierarchy. A client request is routed to the root of the hierarchy and from there is forwarded down the hierarchy, until it reaches a replica router with enough knowledge about the replica's internetwork location to make an informed redirection decision. This approach has similar performance and scaling limitations as the prior approaches summarized above based on hierarchies of Web caches, flooding of information among caches or servers, and forwarding of requests over multiple hops.

Another recent approach to directing clients to hosting sites with requested information objects or services is the enhanced network services method by Phillips, Li, and Katz (S.G. Phillips, A.J. Li, And D.M. Katz, "Enhanced Network Services Using a Subnetwork of Communicating Processors," US. Patent US 6,182,224, January 30, 2001.). Insofar as directing clients to servers, the enhanced network services method is very similar to the gathering of location data with router support advocated by Guyton and SchwartZ described previously. As in the Guyton and Schwartz's approach, routers using the enhanced network services approach gather network topological data and also include as part of their normal routing exchanges information about the hosts that can provide content and services to clients; routers can then rank the hosts according to their relative distance in the network. In addition to data regarding hosts that can provide services, routers in the enhanced network services approach can include in their normal routing exchanges host information regarding logged-in users and willingness to pay for performing a designated service. In contrast to the proposal by Guyton and Schwartz, the enhanced network services approach does not attempt to limit the amount of network topological Information that routers need to exchange in order to direct clients to best qualified servers. This approach has, therefore, similar performance and scaling limitations as the prior approaches summarized above based on flooding of information along caches or servers, and forwarding of requests over multiple hops.

EP 1 017 204 discloses a DNS responding device which distributes a work load by routing a service request from a client terminal to any one of many server terminals based on a measured route load, WO 98/26559 discloses a method of assigning user requests to replicated servers in a manner that attempts to meet the goals of a particular routing policy WO 99/06913 discloses a content-aware flow switch which intercepts a client content request in an IP network, and transparently directs the content to a best fit server. WO 01/69457, which is prior art under Art. 54(3) EPC, discloses selection of an address of an information object repository according to specified performance metrics, regardless of whether or not the repository maintains a local copy of the requested information object.

### SUMMERY OF THE INVENTION

The present invention address shortcomings of the above-described schemes. Accordingly, the invention provides a method as set out in claim 1 and a communication system as set out in claim 8.

In one embodiment, the present method returns, in response to a request therefore, an address of a first server that should service a second server's requests for an information object. The address of the first server is selected according to specified performance metrics, for example one or more of average delay from the first server to the second server, average processing delays at the first server, reliability of a path from the first server to the second server, available bandwidth in said path, and loads on the first server. Preferably, though not necessarily, the first server is an optimum server for servicing the second server's request.

A further embodiment of the invention provides a communication protocol that includes one or more messages passed between Web routers over a reliable transmission protocol used for inter-Web router communication. These messages include information which allows the Web routers to dynamically update mappings of information objects to server addresses based on specified performance metrics. Preferably, the mappings are optimal mappings of the information objects to the server addresses. The messages report updated distances from the server addresses to another information object. For each updated distance, the messages further report an associated server.

In yet another embodiment, an address of a requesting server seeking an information object is mapped to an address of an information object repository that has a best distance to the requesting server according to specified performance metrics. Distance information between information object repositories may be computed according to a shortest-path first algorithm.

In still another embodiment, mapping an information object and a server by only trusting a neighbor node of a communication network that offers a shortest path to the server is provided. In the case of two or more equal distances, that mapping information which is received is adopted.

### BRIEF DESCRIPTION OF THE DRAWINGS

The present invention is illustrated by way of example, and not limitation, in the figures of the accompanying drawings in which like reference numerals refer to similar elements and in which:
**Figure 1** illustrates an internetwork in which the methods and systems of the present invention may operate.
**Figure 2** illustrates a virtual overlay network of Web routers configured in accordance with an embodiment of the present invention.
**Figure 3** illustrates a hosting site configured with multiple information object repositories and a Web router that operates in accordance with an embodiment of the present invention.
**Figure** 4 illustrates functional componets of a Web router in accordance with an embodiment of the present invention.

### DETAILED DESCRIPTION

The core of the Internet is congested and, hence, delivering content across the Internet incurs high latency. Increasing the bandwidth of the "last mile" (e.g., the last link in communication path to the end user or content source) via high-speed modems and digital subscriber line (DSL) technology, for example, alone will not improve the end-user experience of the Internet. What is required is a reduction in the end-to-end latencies of the Internet by avoiding congestion points in the core of the Internet.

To avoid Internet congestion and reduce latencies, content (e.g., web pages and related information objects) must be moved to the edge, i.e., to locations that are close to the clients. This requires maintaining copies of content on several caches (or servers or other storage devices, which collectively may be and are referred to herein as information object repositories) located around the Internet, and then directing clients to an optimum information object repository for servicing of a request. The present invention enables this functionality.

Stated differently, the present invention provides a method and system for directing a client (e.g., a Web browser) or another requestor (e.g., a server, name server, directory server, cache or other computer system) to an optimal information object repository (e.g., a server or cache) among many available such devices. An optimal information object repository, from a requestor's viewpoint, may be one that offers the lowest response time in delivering a requested information object. When the information object repository does not hold the requested information object (which term is used herein to include both information objects and services), it obtains that information object from another information object repository that has the information object. In the case that none of the information object repositories in the system have the requested information object, the information object repository that first received the request may approach the main or origin content server to obtain the requested information object. As used herein, the term origin content server is meant to indicate a server that serves as the origination point for a piece of content (e.g., text, video, audio, etc.). Such content may subsequently be replicated at one or more Web caches (or other information object repositories). Thus, a method and system for the discovery of information objects and information object repositories storing those information objects distributed over computer networks will be described herein.

In the following description, numerous specific details are set forth in order to provide a thorough understanding of the present invention. However, it will be evident to those of ordinary skill in the art that some of these specific details need not be used to practice the present invention and/or that equivalents thereof may be used. In other cases, well-known structures and components have not been shown in detail to avoid unnecessarily obscuring the present invention. Thus, although discussed with reference to certain illustrated embodiments, upon review of this specification, those of ordinary skill in the art will recognize that the present system and methods may find application in a variety of systems and the illustrated embodiments should be regarded as exemplary only and should not be deemed to be limiting in scope.

Some portions of the description that follow are presented in terms of algorithms and symbolic representations of operations on data within a computer memory (e.g., in pseudocode). These algorithmic descriptions and representations are the means used by those skilled in the computer science arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared and otherwise manipulated. It has proven convenient at times, principally for reasons of common usage, to refer to these signals as bits, values, elements, symbols, characters, terms, numbers or the like. It should be borne in mind, however, that all of these and similar terms are to be associated with the appropriate physical quantities and are merely convenient labels applied to these quantities. Unless specifically stated otherwise, it will be appreciated that throughout the description of the present invention, use of terms such as "processing", "computing", "calculating", "determining", "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

As indicated above, the present invention may be used to determine an optimum information object repository from which to retrieve an information object or service when a client (or other requestor) requests such an information object or service from a server (or other information object repository) that does not have the requested item or a copy thereof. Upon receiving an instruction to do so, the server that has been contacted by the client contacts the information object repository that has been determined to be the optimum one using the methods and procedures of the present invention and directly requests the information object or service.

The address of the information object repository returned in response to the request is the one that maintains a local copy of the originally requested information object or service and is the "best" information object repository selected according to specified performance metrics. It is assumed in this discussion, therefore, that the information object repositories are connected using a virtual (or physical) network and can reach each other. The specified performance metrics may include one or more of an average delay from one information object repository to another along the network(s) (i.e., network delays), average processing delays at an information object repository, reliability of a path from one information object repository to another, available bandwidth in said path, and loads on the various information object repositories.

As will become apparent, in order to enable the functionality provided by the present invention, so-called Web routers are utilize. In the present discussion, the term Web router refers to an embodiment of a computer system configured in accordance with the methods (described below) needed to map or associate the identifier of an Information object or service with the address of the optimal information object repository that can deliver the requested information object or service to another server (i:e., the requesting server that will ultimately respond to the original client request). The performance metrics used by Web routers to choose the information object repository(ies) that should provide the requested information object(s) may include any of the above-noted parameters. The functionality of a Web router can be co-located and/or implemented as part of a content server, a Web server, a Web cache, a router or as a separate entity. To simplify its description, the Web router is described and treated herein as a separate entity. Web routers may be implemented in software to be executed by general-purpose (or special-purpose) computer systems, or some or all of a Web router's functionality may be implemented in hardware. Such details are not critical to the present invention.

Web routers make use of a communication protocol to pass messages between one another over a reliable transmission protocol. These messages include information that allows the Web routers to dynamically update the mappings of identifiers of information objects and services to information object repository addresses based on one or more of the specified performance metrics. As indicated, these mapping may, and preferably do, specify optimal associations of information object identifiers to information object repository addresses. Also, the messages passed using the inter-Web router communication protocol may further report an associated address of a Web router co-located with an information object repository (optimal or otherwise) that contains the information object that is the subject of the message.

In order to produce the above-mentioned mappings, distances (e.g., measured in terms of link costs and the like) need to be measured Thus, the present invention makes use of a routing protocol that provides accurate distances from one Web router to another, these distances being based on one or more of the specified performance metrics. In one particular embodiment, a routing protocol known as ALP is used for this purpose (for further information on the Adaptive Link-State Protocol or ALP see, J.J. Garcia-Luna-Aceves and M. Spohn, "Scalable Link-State Internet Routing," Proc. IEEE International Conference on Network Protocols (ICNP 98), Austin Texas, October 14-16, 1998, pp. 52-61, though this is merely for convenience and many other suitable protocols exist and may be used equally as well. In addition, an interfacing protocol between an information object repository and an associated Web router co-located at the site is useful in conjunction with the present invention. In one particular embodiment, the Web Router Communication Protocol (WRCP) is used, however this is merely for convenience and other protocols may be used equally as well, to inform a Web router of the information objects and services added and deleted from its local information object repository.

Before describing further details of the present invention, an overview of an internetwork environment in which Web routers may be deployed will be presented. For purposes of the present invention, a topology of Web routers is defined such that a given Web router has only a subset of all the Web routers in a given system as its neighbor Web routers. Web routers that are neighbors connect to each other using tunnels across one or more communication links. The topology of Web routers and tunnels between them constitutes a virtual overlay network (VON). That is, a VON is defined which interconnects the Web routers and overlays an internetwork made up of conventional IP routers, information object repositories, and other network components. In the VON, each tunnel link is assigned a value that describes the performance metric across the tunnel.

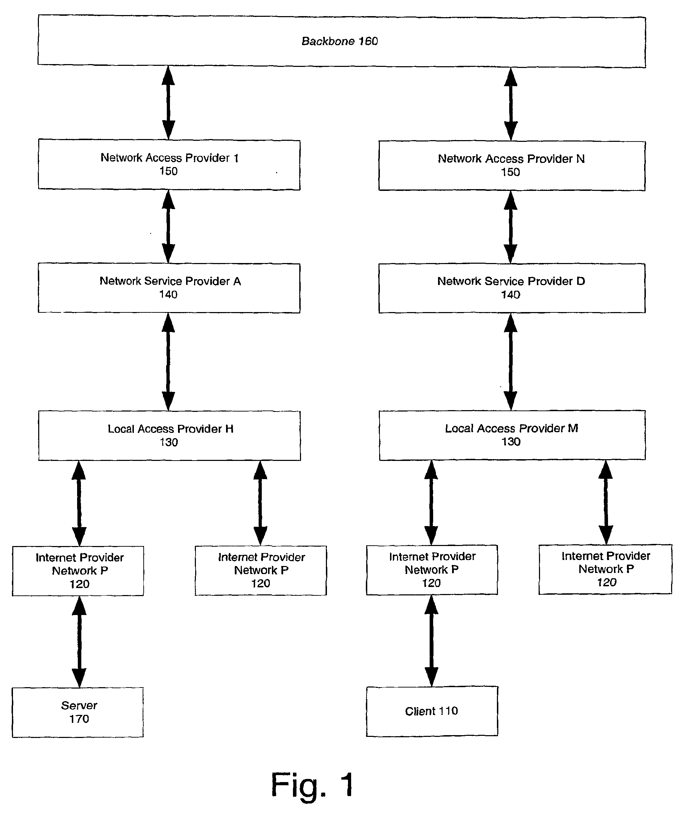

**Figure 1** illustrates an internetwork 100 and the methods and systems described herein enable the direction of clients and/or servers, etc. to either information objects or the caches and servers storing information objects distributed over computer networks such as internetwork 100. One example of an internetwork 100 is the Internet. Other examples include enterprise networks, local area networks, wide area networks, metropolitan area networks and networks of such networks. In the case where internetwork 100 is the Internet, clients 110 will generally access content located at remote servers 170 through a series of networks operated by different providers. For example, clients 110 may have accounts with local ISPs 120 that enable the clients to connect to the Internet using conventional dial-up connections or one of a variety of high-speed connections (e.g., DSL connections, cable connections, hybrids involving satellite and dial-up connections, etc.). ISPs 120, in turn, may provide direct connections to the Internet or, as shown, may rely on other service providers 130, 140, 150 to provide connections through to a set of high-speed connections between computer resources known as a backbone 160. Connecting to a host (e.g., server 170) may thus involve connecting through networks operated by a variety of service providers.

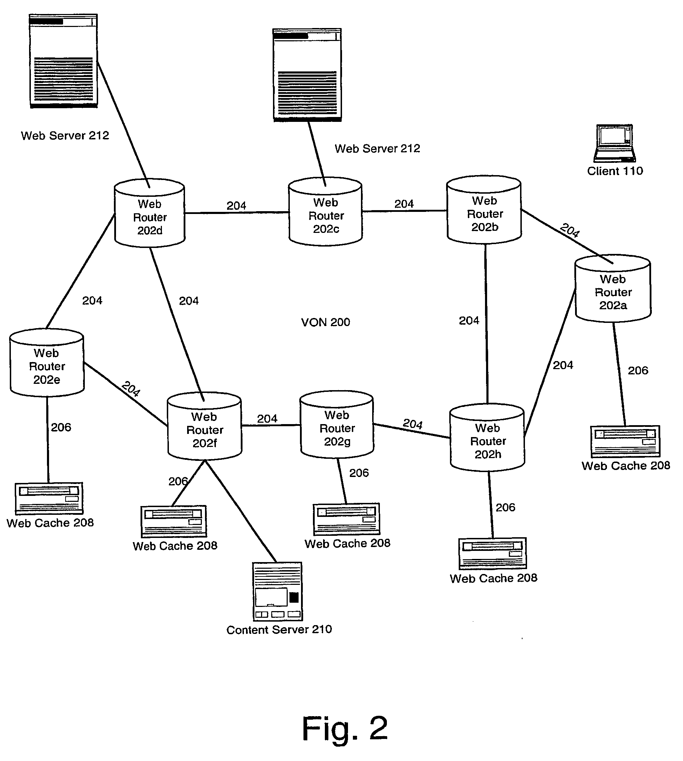

**Figure 2** illustrates a VON 200 of Web routers 202a - 202h defined on top of the physical topology of an internetwork, such as the Internet, consisting of routers interconnected via point-to-point links or networks. The virtual network of Web routers includes point-to-point links 204 configured between the Web routers, and the links 206 configured between a Web router 202 and one or more Web caches 208 and content servers 210. Such links 204, 206 can be implemented using tunnels (e.g., Internet protocol (IP) tunnels) between Web routers 202 and between Web routers 202 and Web caches 208. As discussed above, messages can be exchanged between the Web routers 202 via the tunnels. As shown in the figure, a client 110 is not necessarily part of the virtual network of Web routers.

In one embodiment of the present invention, a collection of one or multiple Web routers 202 is used to refer the request for an object to a Web cache 208 or content server 210 that is able to transfer the requested object to the requestor while satisfying a given set of parameters, such as network delays, bandwidth availability, reliability of paths from the chosen sites to the target client 110, and loads on the Web caches 208 and content servers 210. The method used to select the best site from which information objects should be retrieved by user sites (clients) is transparent to the user sites, and the computer network or internetwork over which the system operates need not support multicast delivery to end-user sites.

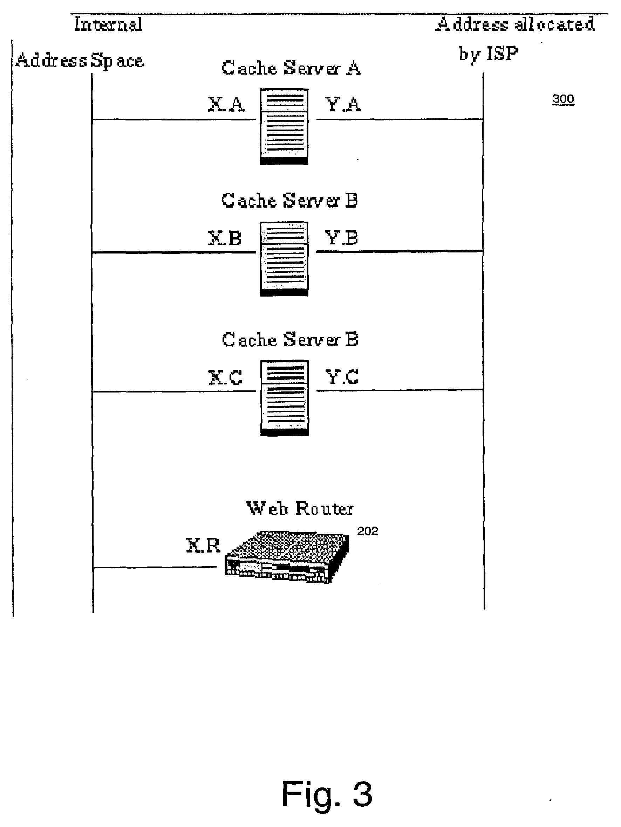

Although shown as separate entities in **Figure 2****,** it should be remembered that Web routers may be co-located with information object repositories (e.g., a Web server, a Web cache, or an original content server) as shown in **Figure 3****,** which is a depiction of a cache site or a hosting site 300. Cache servers A, B and C may also be configured in an internetwork address space by the host ISP. At the same time an internal address space for intercommunication between the caches A, B and C and the web router 202 may be configured. This internal address space may be used within the VON 200 for inter-Web router communications.

As indicated above, to reduce communication and processing overhead in Web routers a topology of Web routers is defined such that a given Web router has as its neighbor Web routers a subset of all the Web routers in the system (where the term system refers to all or a portion of the VON 200 for Web routers discussed above). A Web router may thus be configured with its set of neighbor Web routers. Such a configuration may be expressed as a table of neighbor Web routers that is defined by a network service provider and/or is dynamically updated. In some cases, a Web router may dynamically select the set of neighbor Web routers with which it should communicate out of all of the Web routers in the system.

A Web router preferably communicates with its neighbor Web routers using the Web Information Locator by Distance (WILD) protocol. The WILD protocol is disclosed in commonly owned U.S. Provisional Application No. 60/200401, entitled "System and Method for Discovering Optimum Information Object Repositories in Computer Networks (WILD Protocol), filed April 28, 2000 by J.J. Garcia-Luna-Aceves and Bradley R. Smith, now replaced by commonly owned and co-pending U.S. Patent Application 09/810,148, entitled "System and Method for Discovering Information Objects and Information Object Repositories in Computer Networks", filed March 15,2001, by J.J. Garcia-Luna-Aceves. The WILD communication protocol provides for the exchange of one or more inter-Web router messages via the tunnels. These messages carry the mappings specifying the association between optimal information object repositories and information objects according to the specified metrics. When these mappings change due to changes in the topology of the Internet, the messages carry updated distance information (e.g., as computed according to the performance metrics) in the maps. Thus, using WILD each Web router implements a distributed algorithm and executes a communication protocol with which it determines:
(1) the address of all the other Web routers participating in the same virtual overlay network; and
(2) the optimum distance to each Web router (i.e., the associated information object repository) in the VON and the neighbor Web router that offers such a distance.

The Web routers employ special rules when updating their local maps in response to received messages. The WILD protocol (or simply WILD) running at each Web router then constructs tables (which are stored locally in memory or other computer-readable media) containing the optimal mapping information. Each Web router uses the tables computed by WILD for directing a requestor to an optimal information object repository. Further details regarding the manner in which the maps and tables are generated and shared among Web routers ma be found in co-pending Application No. 60/323,126, entitled "System and Method for Directing Clients to Optimal Servers in Computer Networks" filed September 10, 2001. Briefly, however, one or more tables are constructed at each Web router and these tables contain client-to-server distance information. The tables are stored in a computer-readable medium accessible by the corresponding Web router and are updated in response to revised client-to-Web router distance information. Such revised client-to-Web router distance information may be included in the inter-Web router communication messages and is preferably determined, at least in part, from internetwork connectivity information received through an exchange of messages according to an inter-domain routing protocol. Furthermore, the tables may be updated in response to revised server load information and the updated table information transmitted to one or more of the Web routers using one or more inter-Web router communication messages.

A Web Router that receives more than one set of mapping information from its neighbor picks the set that offers the optimum distance to the information object or service identifier. When more than one neighbor offers an optimum distance to the information object or service, one of them is chosen using a rule that reduces communication overhead. A mapping for an information object identifier and a server is only accepted from a neighbor that offers the optimum distance to the Web router that is sent in the mapping.

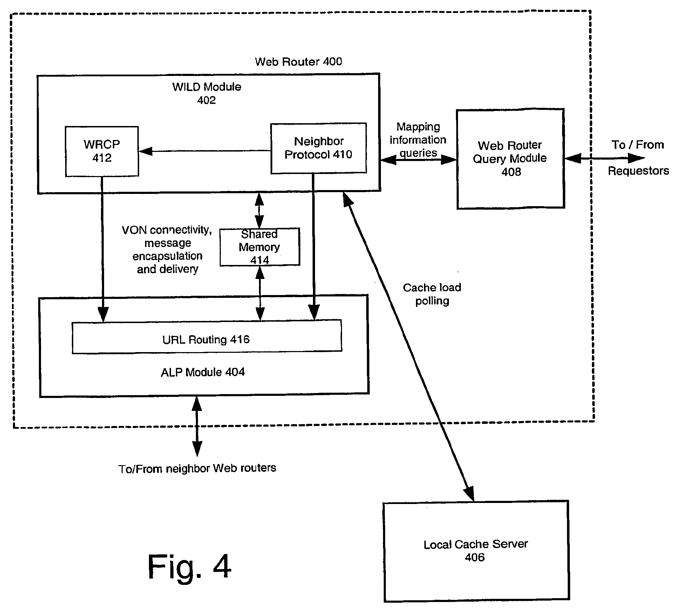

**Figure 4** illustrates the interaction between various functional components that make up a Web router 400. The method implemented in Web routers to determine an optimum server for a given information object or service is referred to as "URL Routing" and an information object identifier or service identifier is referred to as a "URL". The Web router maps each URL provided by a requestor to the address of an information object repository that can optimally provide the associated information object. This mapping of URLs to addresses is accomplished by the collaboration among Web routers through WILD. Accordingly, the Web router contacted by the requestor can return the required addresses immediately after processing the request.

In each Web router 400, a WILD protocol module 402 uses mappings of clients (or, more generally, requestors)-to-Web routers received from other Web routers along with load information regarding any local servers 406 to produce a mapping table that lists the address of the server (i.e., information object repository) that is best suited to service requests from identified clients. The WILD protocol module 402 further uses an ALP module 404 for obtaining VON connectivity and Web router reachability information. It also uses ALP messages to encapsulate and deliver its own WILD messages to neighbor Web routers. As indicated above, other routing protocols can be used instead of ALP, provided that the protocol does not create permanent or long-term loops after link cost increases or resource failures. The ALP module 404 reports distances to the WILD module 402, so that the WILD module 402 knows about unreachable Web routers while determining the validity of different maps. The inter-communication between WILD module 402 and ALP module 404 may take place through the use of shared memory 414.

In one embodiment, various modules, including the ALP module 404, are implemented in GateD. GateD is a commercially available, modular software program that includes certain core services, a routing database and various protocol modules supporting multiple routing protocols. GateD and GateD-based products are available from NextHop Technologies, Inc. of Ann Arbor, MI. ALP module 404 notifies the WILD protocol module 402 as distances to various Web routers and information object repositories change. When a Web router 400 receives a WILD message (i.e., a WILD message that was received encapsulated in an ALP message), it first validates the message contents, and then updates its tables based on distance. The end result is that the WILD tables at each Web router 400 converge to the optimum mappings.

The WILD protocol module 402 obtains load information from its local information object repository 406. This load information is subsequently used by the WILD protocol module 402 for generating the mappings discussed above. More particularly, the WILD module 402 periodically polls the local information object repository 406 to obtain the load information. If the information object repository 406 fails, a load of infinity is reported to the WILD module 402.

The WILD protocol module 404 also interacts with a Web router query (WRQ) module 408 in directing requestors to optimum information object repositories. The Web router 400 responds to queries from the WRQ module 408 for the nearest server, Web cache, redirector, DNS server or another Web router. A Web router may be contacted through the WRQ module 408 by a client or a server (or other information object repository) seeking to discover an optimum information object repository for one or more information objects distributed over the computer network. This scheme makes use of a neighbor protocol module 410.

For purposes of the remaining discussion, assume that each hosting site includes at least one Web router 400 configured for URL routing. Each cache (or other information object repository) establishes connectivity with only one Web router at a time. This Web router becomes the originator of updates related to that cache. Accordingly, if an information object exists on a cache server, then the local Web router becomes aware of that object using WRCP module 412.

The Web router is responsible for determining which of a number of available information object repositories should service a request for an information object or service. The Web router may also determine the information object repository that actually maintains the information object or service so requested, and initiate the process of bringing the information object or service to the information object repository that should service the request. Bringing the requested information object or service to the information object repository which it has been determined should service the request is accomplished, in one embodiment, by instructing that information object repository which will service the request to retrieve the requested information object or service from the information object repository which actually maintains the information object or service. Thereafter, upon receiving an instruction to do so, the information object repository which it has been determined should service the request contacts the information object repository that actually maintains the requested information object or service directly to request the information object or service.

Knowing which information object repository is "optimal" for a given URL requires that the Web routers be provided with distance information concerning those URLs. The specific algorithm that a Web router executes to compute the distance to the nearest server storing a copy of an information object or service depends on the routing information that the Web routers use to compute distances to other Web routers, which are co-located with the servers storing information objects and services. Recall that a Web router is informed by its local server(s) of the load in the server(s) and the information objects and services stored in the servers. Hence, a Web router knows that its distance to information objects and services stored in local server(s) is the latency incurred in obtaining those objects or services from the local servers, which is a direct function of the load in those servers.

Given that a Web router executes a routing algorithm enabling the Web router to know its distance to other Web routers, a Web router selects the optimum server storing a copy of an information object or service by comparing the local distance to the information object or service (which is the latency incurred by a local server if the object or service is stored locally or infinity if the object or service is not stored locally) with the reported matches of object identifiers to servers reported by its neighbor Web routers. The object-server match report for a given information object or service specifies the identifier of a service or information object, the server where the service or information object is stored, the Web router that is local to that server, and the distance to the server. The distance specified in the object-server match report includes explicitly or implicitly the distance from the neighbor Web router to the server specified in the report, plus the load of the server specified in the report. The Web router then chooses the match of information object to server that produces the minimum distance to the server storing the service or object.

The distance between Web routers is derived from the routing protocol that runs over the virtual overlay network. This routing protocol can be any routing protocol that avoids permanent and long-lasting loops. For instance, any one of the following routing algorithms can be run on the virtual overlay network:
(1) Diffusing update algorithm (DUAL), which is the basis for Cisco's EIGRP;
(2) Loop-Free path-finding algorithm (LPA);
(3) Link-vector algorithm (LVA);
(4) Bandwidth efficient source tree (BEST) protocol;
(5) Dynamic source tree (DST) routing protocol;
(6) Diffusing algorithm for shortest multipaths (DASM);
(7) Multipath distance vector algorithm (MDVA);
(8) Routing on-demand acyclic multipath (ROAM) protocol;
(9) Multiple-path partial-topology dissemination algorithm (MPDA);
(10) Multipath loop-free routing algorithm (MPATH);
(11) Adaptive link-state protocol (ALP);
(12) A topology broadcast protocol, such as the one implemented in the Open Shortest Path First protocol (OSPF);
(13) The path vector algorithm used as part of the Border Gateway Protocol (BGP); or
(14) A static table in a Web router specifying the next hops or paths to every other active Web router in the system.

To provide for the reporting of object-server matches to requestors, each Web router maintains a routing database consisting of a routing table, a server table, and a neighbor table. These tables do not need to be exported to the kernel and therefore their size is only constrained by the limits of the available system memory. The routing tables have sizes proportional to the number of URLs they contain, whereas the server table has a size proportional to the number of information object repositories known by the URL routing protocol. The neighbor table size will be proportional to the number of neighbors (both Web router neighbors and local information object repositories). In order to provide for a constant lookup time, a hash table data structure may be used for all three data structures.

Each URL entry in the routing table has the following fields

| | | |
|---|---|---|
| URL | Cache | Local |
| name | IP | |

*URL name* is the name assigned to the information object. *CacheIP* corresponds to the IP address of the optimum information object repository from which to get the associated information object. *Local* is a bit mask corresponding to the neighbor table. If a cache neighbor has reported a URL, then its bit is set in the bit mask.

Each entry of the server table has the following fields:

| | | | | | | |
|---|---|---|---|---|---|---|
| Cache IP Address | Cache Load | Cache_SN | Web Router | Neighbor | Alp_dist | Counter |

*Cache IP Address* is the 32-bit IP address of the information object repository. *Cache Load* is the value corresponding to the load on that information object repository. This may be measured by a computer process resident at the information object repository and reported to the associated Web router using WRCP. *Cache*_*SN* is the sequence number associated with the last update regarding the information object repository (used for verification). The *Web Router* is the Web router that is responsible for sending updates about the associated information object repository. *Neighbor* stands for the neighbor Web router that offers the best path to the information object repository. *Alp*_*dist* is the distance to the *Web Router* obtained by a routing protocol running in the virtual overlay network. *Counter* is a count of the number of URLs using the identified information object repository.

Each entry of the neighbor table has the following fields:

| | |
|---|---|
| Neighbor | Link |
| Address | cost |

*Neighbor address* is the IP address of the neighbor (Web router or local information object repository). *Link cost* is the cost of the link in the case of Web router neighbors and load in case of information object repository neighbors.

The URL routing process 416 running at each Web router exchanges updates with its peer processes sitting on other Web routers. These updates are exchanged as packets (which may be encapsulated in ALP packets) that include the following header fields.

| | | | | |
|---|---|---|---|---|
| Version Number | Cloud ID | Type | Count | Neighbor Link Cost |

*Version number* indicates the version of the routing protocol running on the Web router originating the message. The version number needs to be checked by the receiving Web router before processing a packet. If the version number indicates that the originating Web router is using a different version of the routing protocol than the receiving Web router, the packet is simply dropped.

It is possible that vendors that deploy URL routing may need to segment off different sections of their network. Each segment is described as a cloud. A *Cloud ID* is therefore a quantity that is set on initial configuration of a Web router. A Web router only accepts packets having the same Cloud ID as itself.

The *Type* of the update message indicates whether the update is a UE1-UE2 combination update or a UE3 kind of update. In a UE1-UE2 update, the *Count* keeps track of the number of information object repository entries in the message. In a UE3 update, the *Count* keeps track of the number of Web router updates in the message. The *Neighbor Link Cost* is the link cost to the neighbor Web router to which this message is being sent.

Each UE1-UE2 update has information regarding an information object repository, followed by a list of URLs corresponding to that information object repository. Therefore, if two URLs from the same information object repository are reported, an optimization can be achieved by sending the information object repository information only once and appending the list of URLs that correspond thereto as follows:

| Cache Ip Address | Load | Web Router | Alp distance to WR | URL Count |
|---|---|---|---|---|
| | | | | |
| URL 1 | ADQ Flag | | | |
| URL 2 | ADQ Flag | | | |

*Cache IP Address, Load, Web Router* and *ALP distance* have the same meaning as in the server table. *URL Count* is the number of URL entries corresponding to the subject information object repository. The *ADQ flag* specifies whether an update message corresponds to an add message (i.e., a message indicating a URL has been added to the local cache), a delete message (i.e., a message indicating a URL has been removed from the local cache) or a query. A Web router that receives a query must return its latest routing table entry to the neighbor that sent the query. In the pseudocode described below, the command to consolidate updates ends up arranging each update in this fashion.

A UE3 update asks for all routes from a Web router. This query simply sends the Web router address that is of interest and is an efficient method to keep updated tables in the absence of neighbor tables.

URL routing module 416 tries to pick the URL entry whose sender is at the optimum distance, i.e., whose network latency to the information object repository plus the associated load is the smallest. The network latency to the actual information object repository is essentially the same as the network latency to the Web router associated therewith. The network latency to the associated Web router is obtained using a routing protocol that provides distances to Web routers, such as ALP. Therefore, there is no tree traversal involved and the complexity of URL routing is reduced to *O(U.N),* where *U* is the number of URLs and *N* is the number of neighbors.

Using the URL routing process a Web router responds to the following external inputs in order to maintain up-to-date matches between information object repositories and information object or service identifiers:
(1) Adds/deletions from an associated information object repository transmitted using WRCP.
(2) Changes in load from an associated information object repository transmitted using WRCP.
(3) Changes in information object repository connectivity received through the neighbor protocol.
(4) URL updates from other neighbor Web routers (e.g., received via WILD).
(5) Changes in Web router neighbor connectivity reported by the routing protocol used to compute distances to other Web routers (e.g., ALP).
(6) Changes in distances to other Web Routers.
(7) URL lookup queries from WRCP.

Also using URL routing, a Web router sends the following outputs:
(1) Response to a query sent by WRCP.
(2) URL updates to Web router neighbors.

When a Web Router receives any of the above inputs, it takes the following actions:
(1) If the input offers a better distance to the URL, change the routing table to use the new input and send out an add update.
(2) If the input offers a worse distance than the present one, ignore it.
(3) If the input causes the loss of the last path, send out a delete.
(4) If the input causes a distance increase or causes the Web router to pick a different path, change the routing table accordingly and send out a query.

The various functional modules described above, along with the interfaces between the modules, are best presented in the following pseudocode. This includes the inter-process communications (calls) as well as the main procedures themselves. For convenience, the routing protocol used to compute distances between Web routers is assumed to be ALP; however, other routing protocols could be used instead. Furthermore, the information object repositories used to store information objects or services are referred to as caches, though this term should be understood to include all forms of information object repositories. In the pseudocode, the following variables and data structures are used:
i: The Web router in which the algorithm is running.
*Ni*: The current set of neighbors reported by ALP and Neighbor Protocol.
*URT*: Shared memory URL routing table with all known URLs. Each entry has the following fields:
   *url:* The first 32 bits of the MD5 hash of the URL.
   *p*_*cache*: The preferred cache.
   *p_port*: The port used by the preferred cache.
   *local*: bit mask corresponding to the local caches that have the URL.
*NT*: Neighbor Table with entries for each neighbor in *Ni.* Each entry has the following fields:
   *nbr*_*ip*: IP address of the neighbor
   *nbr_port*: Port for a cache neighbor
   *l_cost*: Cost of the link to the neighbor
*CT*: Cache table for all the caches currently known by URL Routing. Each entry has the following fields:
   *cache*: IP address of the cache
   *port:* Port of the cache
   *load*: Load on the cache
   *web_rtr*: Web router associated with that cache
   *nbr*: Neighbor that offers the shortest path to *web_rtr*
   *alp_dist*: Alp distance to *web_rtr*
   *counter*: Number of NURT entries that point to this cache entry
Each packet has the following header fields:
   *version*: Version number of the protocol
   *cloud:* Cloud in which the protocol is running
   *l_cost:* Link cost to neighbor to whom the packet is being sent
*UE1:* update entry of type 1 in a packet. Each entry has the following fields:
   *cache*: IP address of the cache
   *load*: Load on the cache
   *cache*_*sn*: Sequence number associated with the last update about the cache
   *web_rtr:* Web router associated with the cache
   *alp_dist:* ALP distance to above web router
*UE2:* update entry of type 2 in a packet. Each entry has the following fields:
   *url:* First 32 bits of the MD5 hash of the URL
   *flag:* Can be set to add or delete or query depending on the update
*UE3:* update entry of type 3 in a packet. Each entry has the following fields:
   *web_rtr:* Web router to which distance has decreased

The first set of inter-process calls to be presented are those made by ALP module 404 to the URL roulting process 416. For each procedure, a description is provided to orient the reader.
void **alpUrlInit** (u_int32 name);
PARAMETERS:
DESCRIPTION: This procedure is called by ALP when the routing protocol starts up. Used for initialization of data structures, in one embodiment hash table structures for the routing table and the neighbor tables are intialized.
void **alpUrlCleanup** (void);
PARAMETERS:
DESCRIPTION: This procedure is called by ALP when the routing protocol goes down. This procedure will free up memory and any other resources.
void **urlAlpRecvUpdate**(u_int32 nbrAdr, u_int8 * msg, u_int32 msgLen);
PARAMETERS:

| | |
|---|---|
| nbrAdr | Address of neighbor that sent the message |
| msg | URL message (opaque format for ALP) |
| msgLen | Number of bytes in msg |

DESCRIPTION: This procedure is called by ALP when a URL message is received. The procedure converts the byte stream provided by ALP after receiving a packet into a data structure that can be easliy read out entry by entry
void **urlAlpChangeNbrState**(array web_router_changes, u_int8 upDown)
PARAMETERS:

| | |
|---|---|
| web_rtr_changes | Array of records with the following fields: |
| web_rtr | Address of neighbor/web router |
| distance | Cost of link of neighbor/distance to web router |
| nbr | The next hop neighbor |
| upDown | Set to 1 if the link to the neighbor came up, set to 0 if the link to the neighbor was taken down |

DESCRIPTION: This module is called when the status of a link to a neighbor Web router changes. It is assumed that the first entry in the table web_rtr changes corresponds to the neighbor Web router and all the other entries correspond to the other Web routers for which the Web router in the first entry is the chosen neighbor. Each entry in the array is a Web router and the alp distance and the next hop neighbor associated with it.
void **urlAlpChangeNbrLinkValue**(array web_rtr_changes[]);
PARAMETERS:

| | |
|---|---|
| web_rtr_changes | Array of records with the following fields: |
| web_rtr | Address of neighbor/Web router |
| distance | Cost of link of neighbor/distance to Web router |
| nbr | The next hop neighbor |

DESCRIPTION: This module is called when a link cost to a neighbor decreases. It is assumed that the first entry in the table web_rtr_changes corresponds to the neighbor Web router and all the other entries correspond to the other Web routers for which the Web router in the first entry is the chosen neighbor. Each entry in the array is a Web router and the alp distance and the next hop neighbor associated with it.
void **urlAlpChangeDistance** (array web_rtr**_**changes[ ]);
PARAMETERS:

| | |
|---|---|
| web_rtr_changes | Array of records with the following fields: |
| web_rtr | Address of neighbor/Web router |
| distance | Cost of link of neighbor/distance to Web router |
| nbr | The next hop neighbor |

DESCRIPTION: This module is called when a distance change to a destination occurs in ALP. The input is an array of Web routers with the new distances and new neighbors to them.

Next, the calls from URL routing module 416 to ALP module 404 are presented.
void **urlAlpGetNewSeqNumber**(AlpSeqNum * seqNum);
PARAMETERS:

| | |
|---|---|
| seqNum | Sequence number to be returned |

DESCRIPTION: Return a sequence number to the URL routing module.
s_int8 **AlpCompareSeqNum**(AlpSeqNum* sn1, AlpSeqNum sn2);
PARAMETERS:

| | |
|---|---|
| sn1 | Sequence number |
| sn2 | Sequence number |

DESCRIPTION: Return -1 if sn1 < sn2, 0 if sn1 = sn2, 1 if sn1 > sn2.
u_int8 **urlAlpIsNbr**(u_int32 nbrAdr);
PARAMETERS:

| | |
|---|---|
| nbrAdr | Address of a router running ALP |

DESCRIPTION: Returns TRUE if nbrAdr is a neighbor, FALSE otherwise.
u_int32 **urlAlpGetDistance**(u_int32 dstAdr);
PARAMETERS:

| | |
|---|---|
| dstAdr | Address of the destination |

DESCRIPTION: Returns the cost of the path to destination dstAdr. Returns ALP_INFINITY if the destination is unreachable.
u_int32 **urlAlpGetNeighbor**(u_int32 dstAdr);
PARAMETERS:

| | |
|---|---|
| dstAdr | Address of the destination |

DESCRIPTION: Returns the neighbor to destination dstAdr. Returns NULL if the destination is unreachable.
void **urlAlpSendUpdate**(u_int8 * msg, u_int32 msgLen);
PARAMETERS:

| | |
|---|---|
| msg | Buffer with opaque data |
| msgLen | Number of bytes in the message |

DESCRIPTION: Broadcast the URL routing message to all the neighbors.
void **urlAlpSendNbrUpdate**(u_int32 nbr, u_int8 * msg, u_int32 msgLen);
PARAMETERS:

| | |
|---|---|
| nbr | Neighbor Web router to which the message needs to be |
| sent | |
| msg | Buffer with opaque data |
| msgLen | Number of bytes in the message |

DESCRIPTION: Unicast the update message to one neighbor.

The following are the calls made by the WRCP mdule 412 to the URL routing module 416.
void **updateURL**(array tuple[]);
PARAMETERS:
tuple is an array where each entry has the following fields

| | |
|---|---|
| cache | IP Address of the cache from which the add/delete inidcation originates |
| port | Port of the cache from which the add/delete inidcation originates |
| upper32 | First 32 bits of the Md5 hash of the URL |
| ttl | TTL (time to live) value associated with the URL |

DESCRIPTION: This function is called by the WRCP module to inform the URL routing module that local cache objects have been added or deleted.
int **findURL** (u_int32 * cache, u_int32 upper32);
PARAMETERS:

| | |
|---|---|
| cache | Pointer to the cache which is closest |
| port | Pointer to cache's port |
| upper32 | First 32 bits of the Md5 hash of the URL |

DESCRIPTION:This function is called by the WRCP module to obtain the best cache for a URL. Returns 0 for a correct find and non-zero for all other cases. When the function returns 0, the cache contains address of closest cache.
int **changeCacheLoad**( u_int32 cacheAdr, u_int16 port, u_int16load)
PARAMETERS:

| | |
|---|---|
| cacheAdr | Address of the cache from which the load inidcation originates |
| port | Port of cache from which the load inidcation originates |
| load | Present load of the cache |

DESCRIPTION: This function is called by WRCP to inform the Web router of load changes in the cache.

Although not discussed in detail above, there are some "house keeping" routines that run on a Web server. For example, a time to live (TTL) clearing daemon is responsible for deleting table entries after expiration of an associated TTL. In this way, stale entries are not kept so that only "live" information is returned to requesting clients and servers. The call from the TTL clearing daemon to the URL routing module 416 is as falls:
void **delUrlTTL**(u_int32 url)
PARAMETERS:

| | |
|---|---|
| url | First 32 bits of the MD5 hash of the URL |

DESCRIPTION: This procedure is called by the TTL clearing daemon when the TTL of a URL in the database expires.

As implied by the above, a TTL database is maintained so that the TTL clearing daemon can keep track of the lives of the various URLs. Calls from the URL routing module 416 to the TTL database may be made as follows:
void **addUrlTTL**( u_int32 url, u_int32 ttl)
PARAMETERS:

| | |
|---|---|
| url | First 32 bits of the MD5 hash of the URL |
| ttl | Time to live value for the url |

DESCRIPTION: This function is called to add a URL and its TTL to the database.
void **readUrlTTL**(u_{_}int32 url, u_int32 ttl)
PARAMETERS:

| | |
|---|---|
| url | First 32 bits of the MD5 hash of the URL |
| ttl | Time to live value for the url |

DESCRIPTION: This function is called to retrieve a TTL from the database.

The final inter-process procedure to be presented involves calls from the neighbor protocol module 410 to the URL routing module 416.
void **changeCacheNeighborState** (u_int32 cacheAdr, u_int16 port, u_int8 upDown,
u_int16 load);
PARAMETERS:

| | |
|---|---|
| cacheAdr | Address of the cache for which the change has taken |
| place | |
| port | Port being used by the cache |
| upDown | Set to 1 if the link to the neighbor came up, set to 0 if the link to the neighbor was taken down |
| load | Load of cache when it comes up |

DESCRIPTION: This function is called by the neighbor protocol when the link to a local cache comes up or goes down.

Having thus described the inter-process procedures, pseudocode describing the main Web router procedures themselves will now be presented. The following module is called on initialization by ALP:

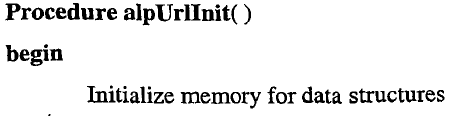

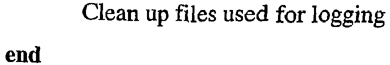

The following module is called when an indication arrives that a local cache 406 has added/deleted a number of URLs.

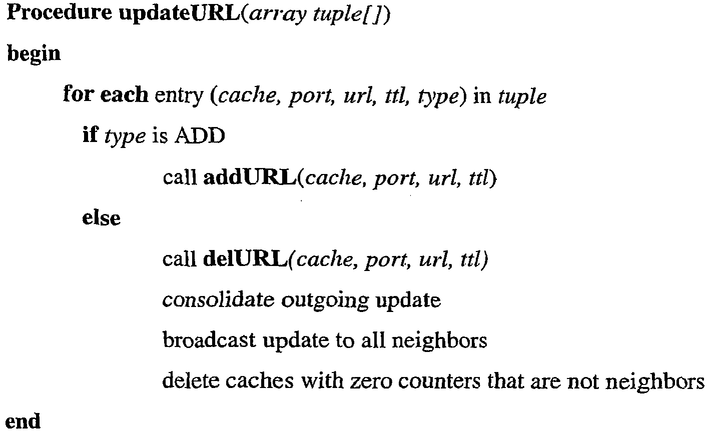

The following module is called when an indication arrives that a local cache 406 has loaded a URL.

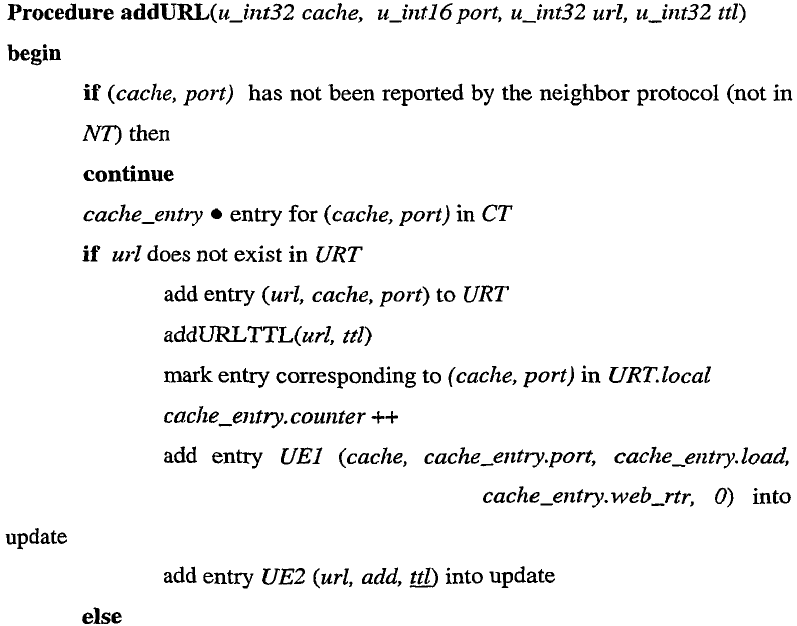

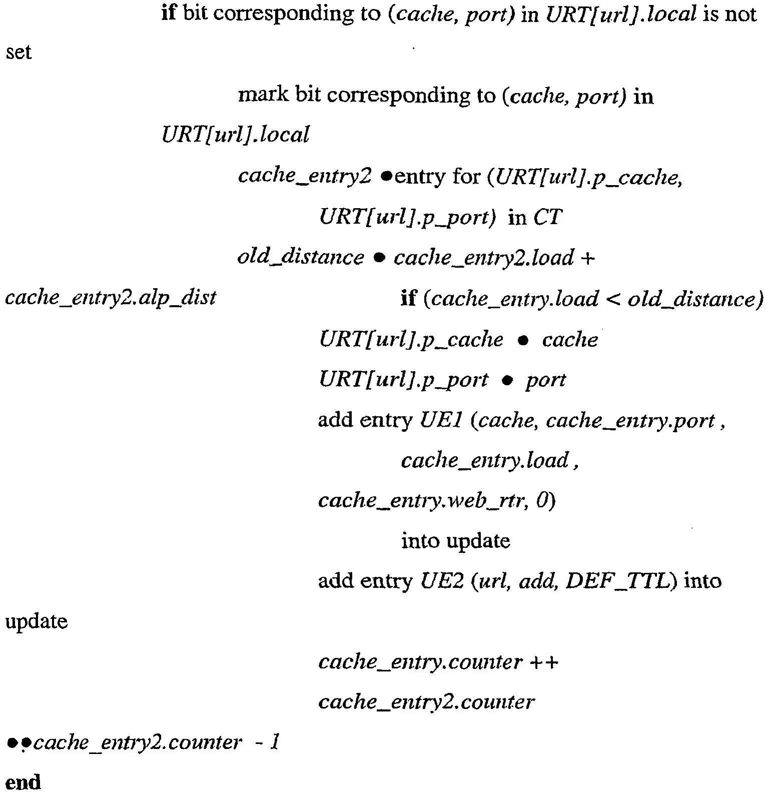

The following module is called when the WRQ module 408 requires the closest cache to the identified URL.

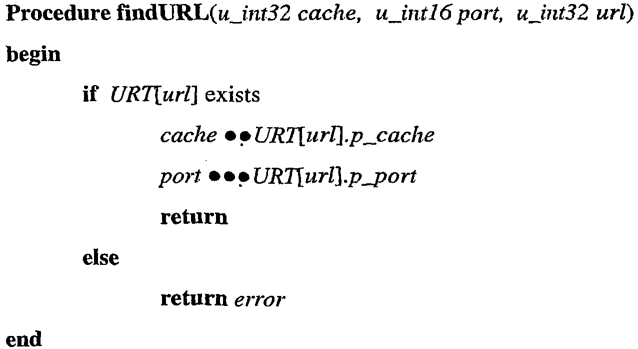

The following module is called when an indication arrives that the local cache 406 has deleted a URL.

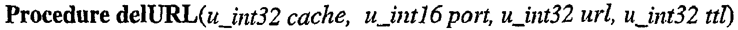

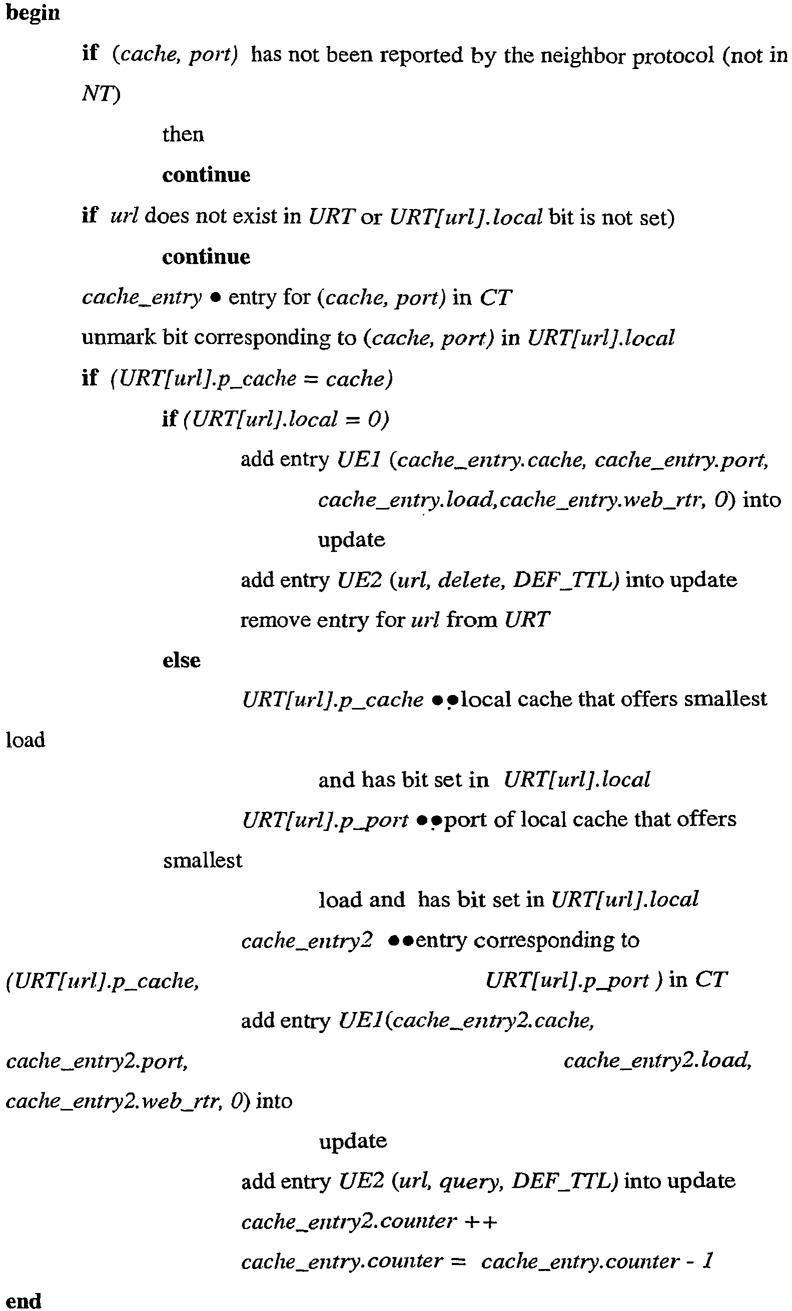

The following procedure is called by the TTL clearing daemon when the TTL of a URL in the database expires.

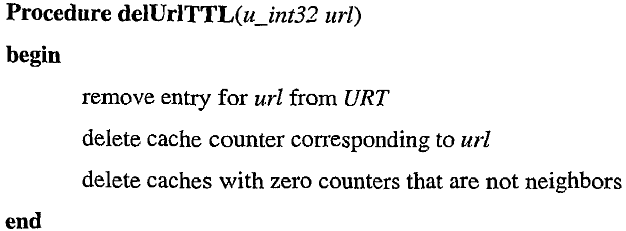

The following module is called when the status of a link to a neighbor cache changes.

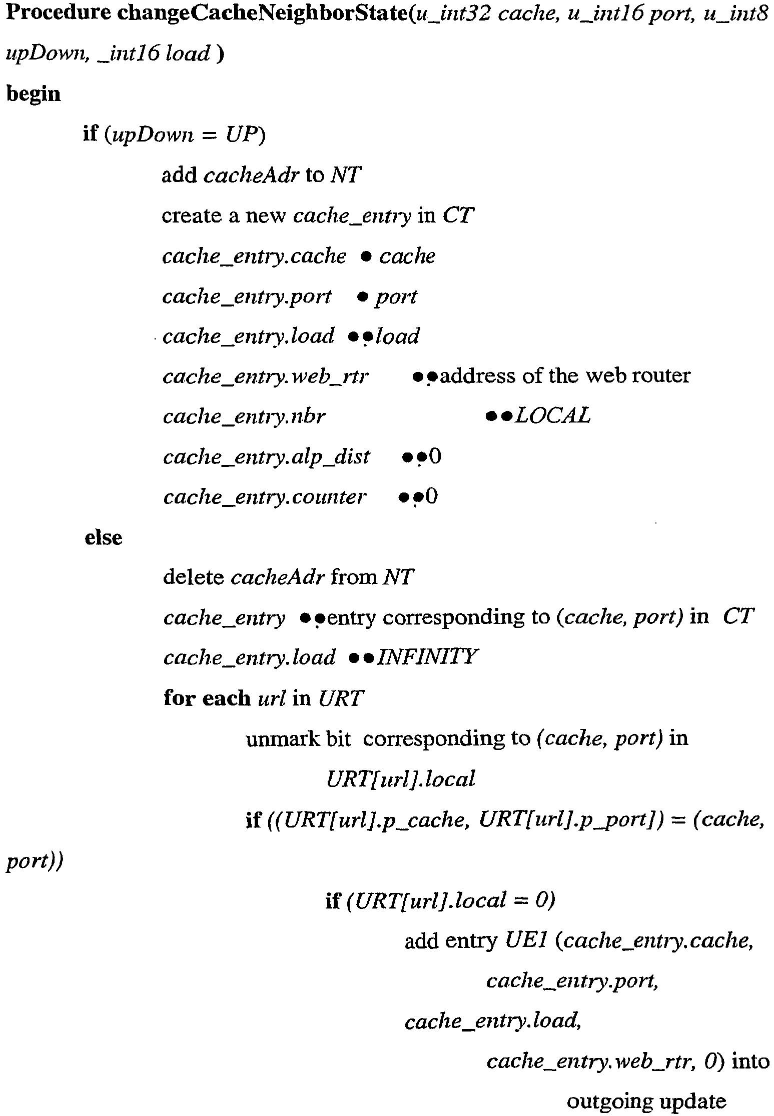

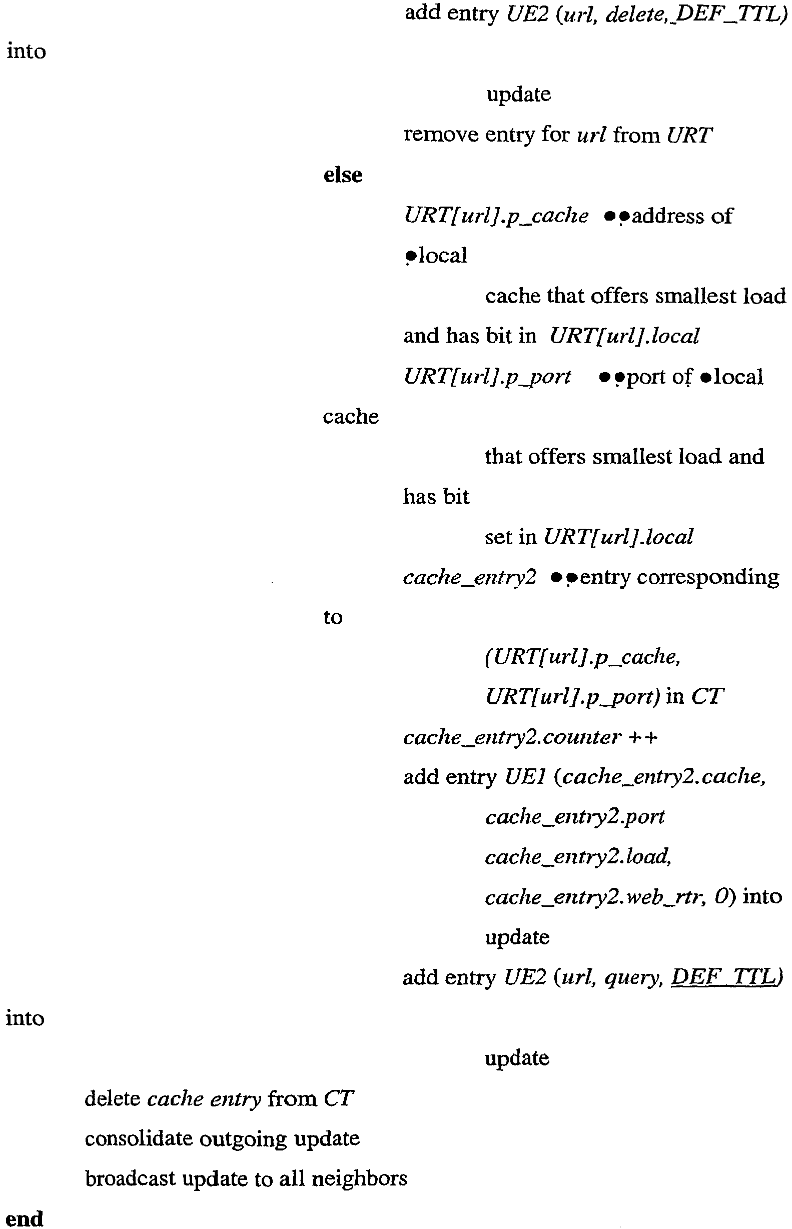

The following module is called by WRCP module 412 when it receivesan indication that the load on a neighbor cache has changed.

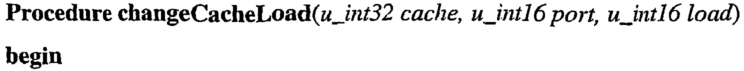

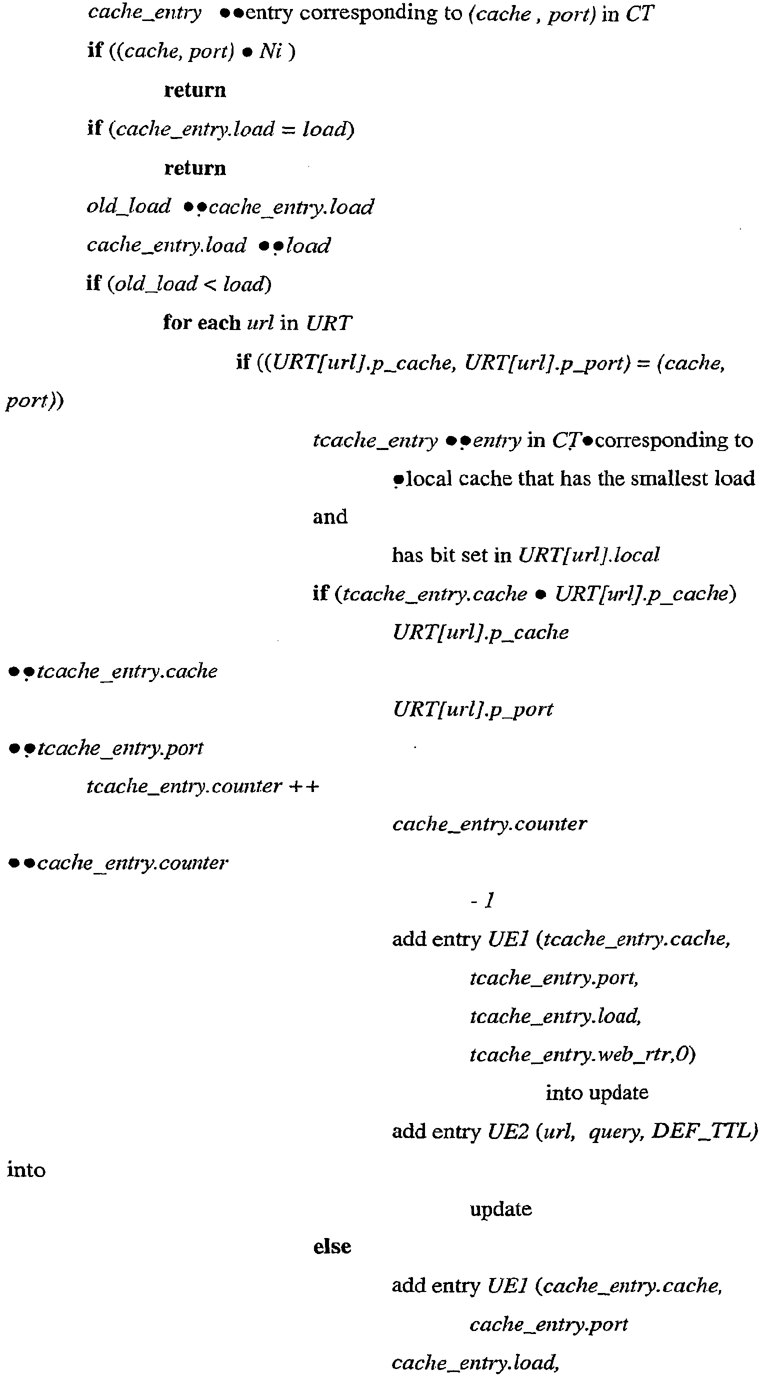

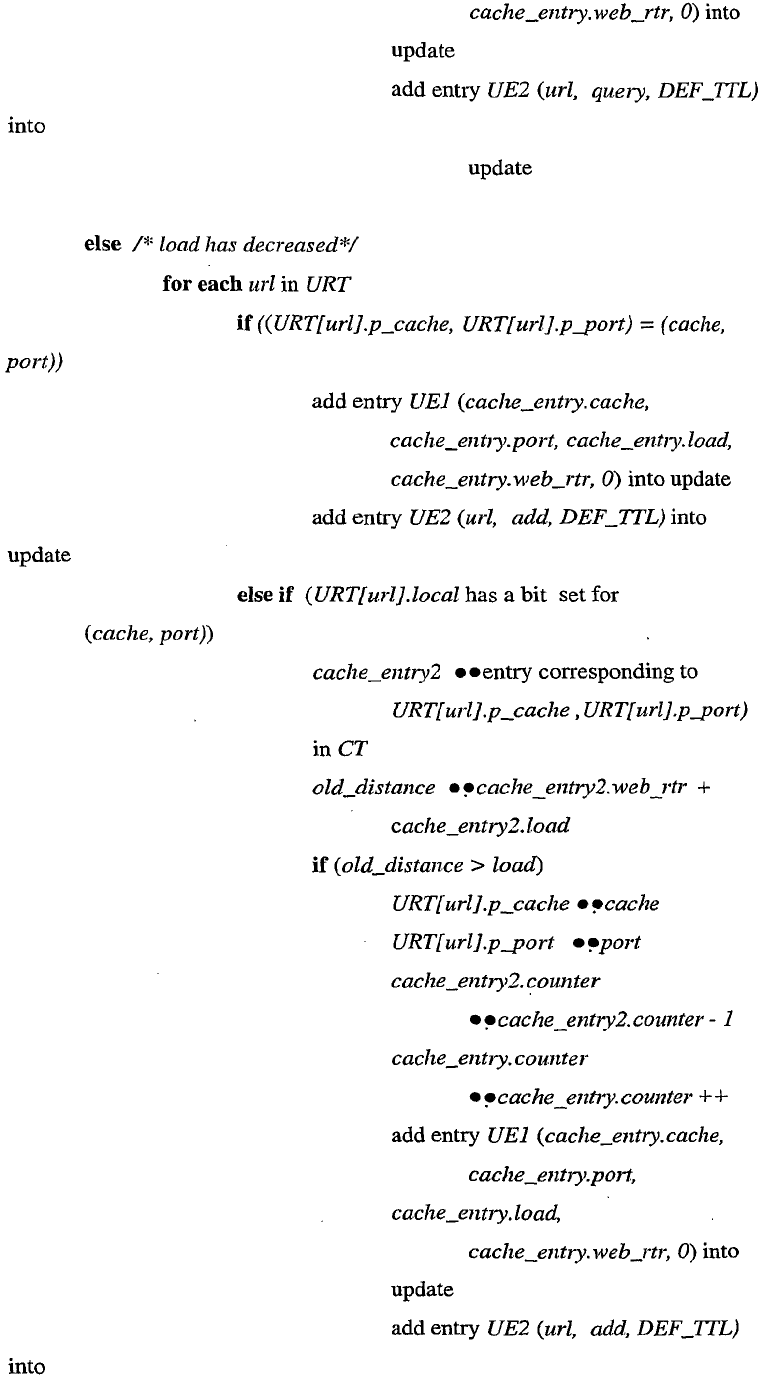

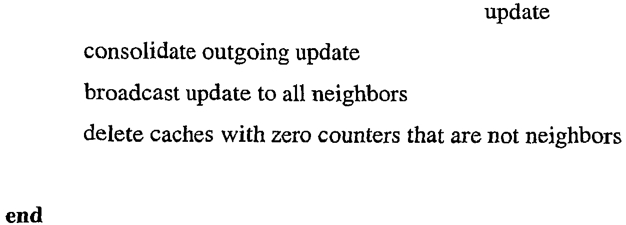

The following module is called when the status of a link to a neighbor Web router changes. It is assumed that the first entry in the table web_rtr_changes corresponds to the neighbor Web router and all the other entries correspond to the other Web routers for which the Web router in the first entry is the chosen neighbor. Each entry in the array is a Web router and the alp distance and the next hop neighbor associated with it.

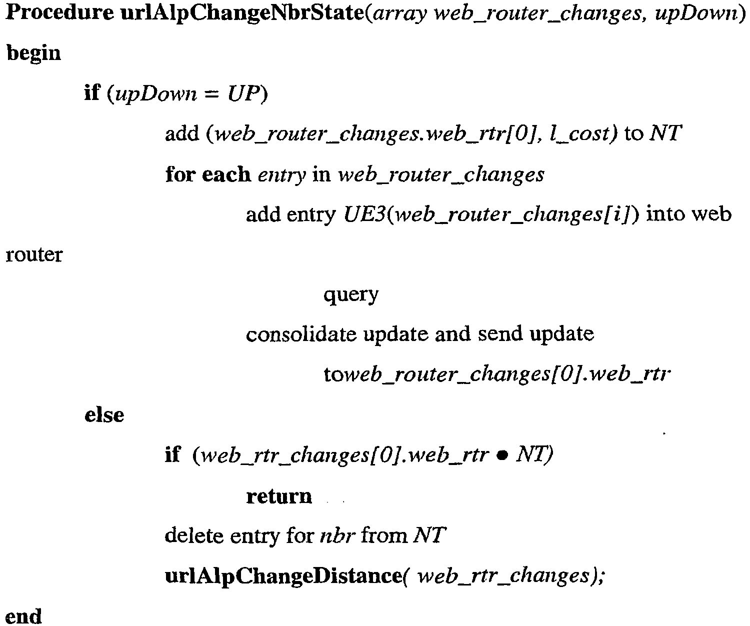

The following module is called when a link cost to a neighbor changes. It is assumed that the first entry in the table web_rtr_changes corresponds to the neighbor Web router and all the other entries correspond to the other Web routers for which the Web router in the first entry is the chosen neighbor. Each entry in the array is a Web router and the alp distance and the next hop neighbor associated with it.

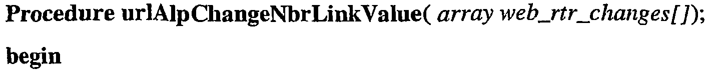

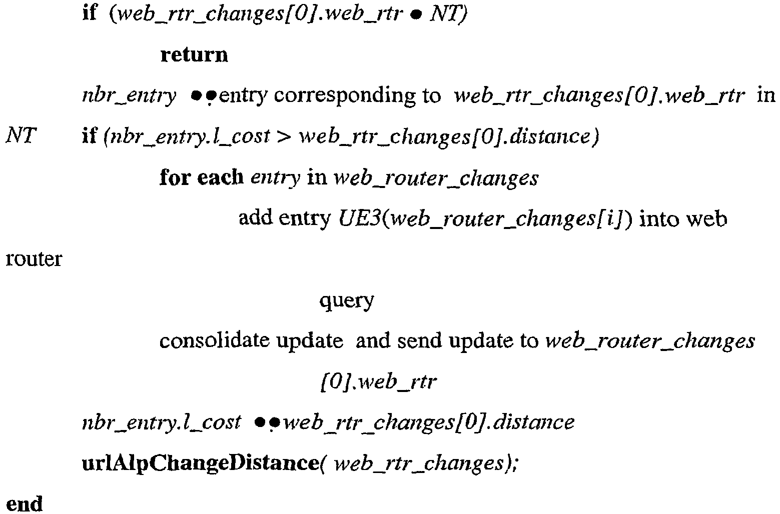

The following module is called when a distance change to a destination occurs in ALP. The input is an array of Web routers with the new distances and new neighbors to them.

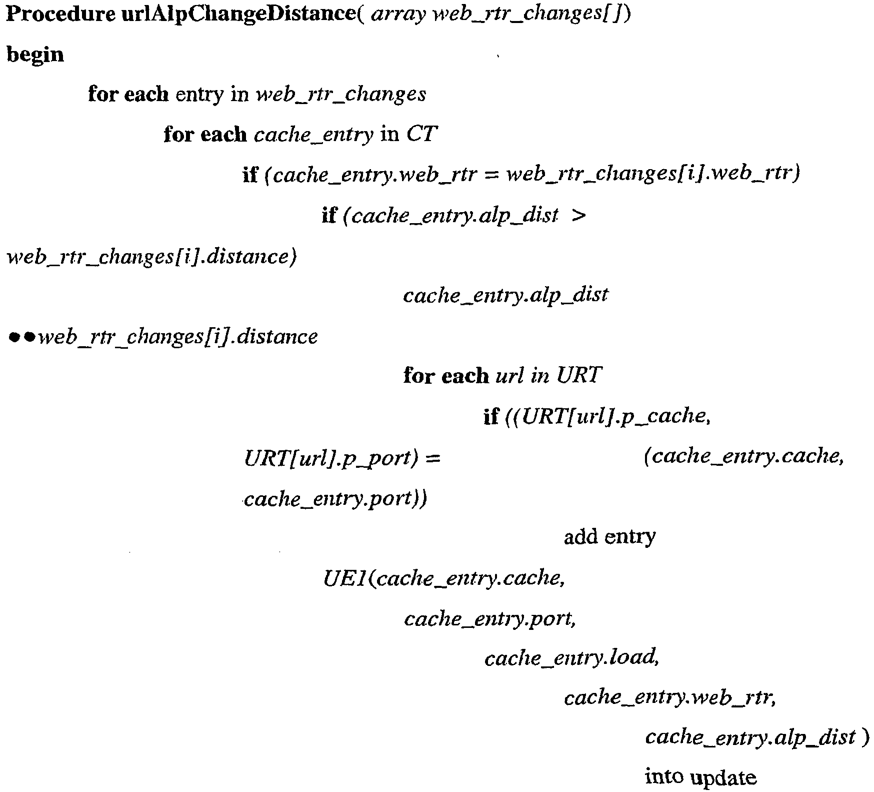

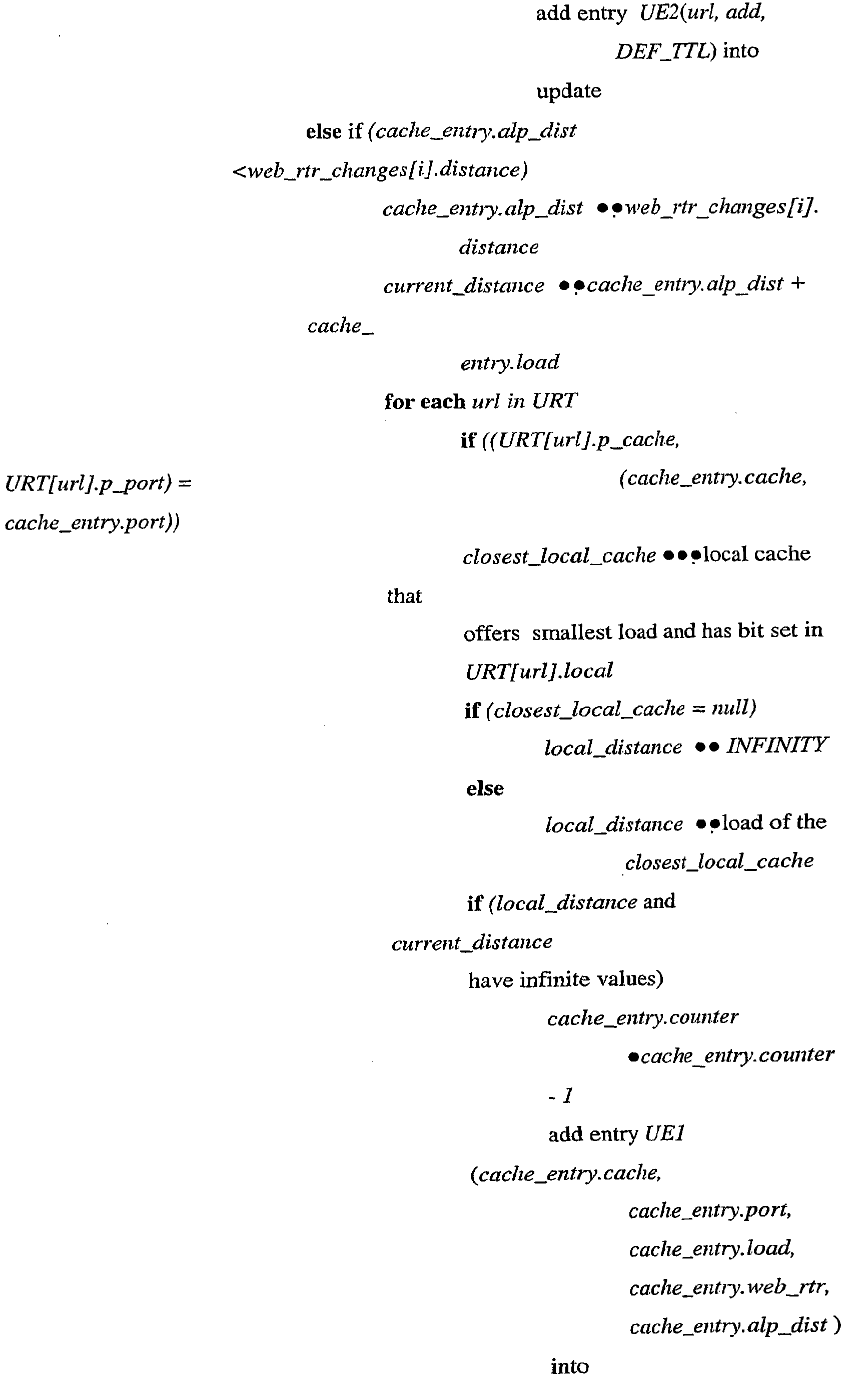

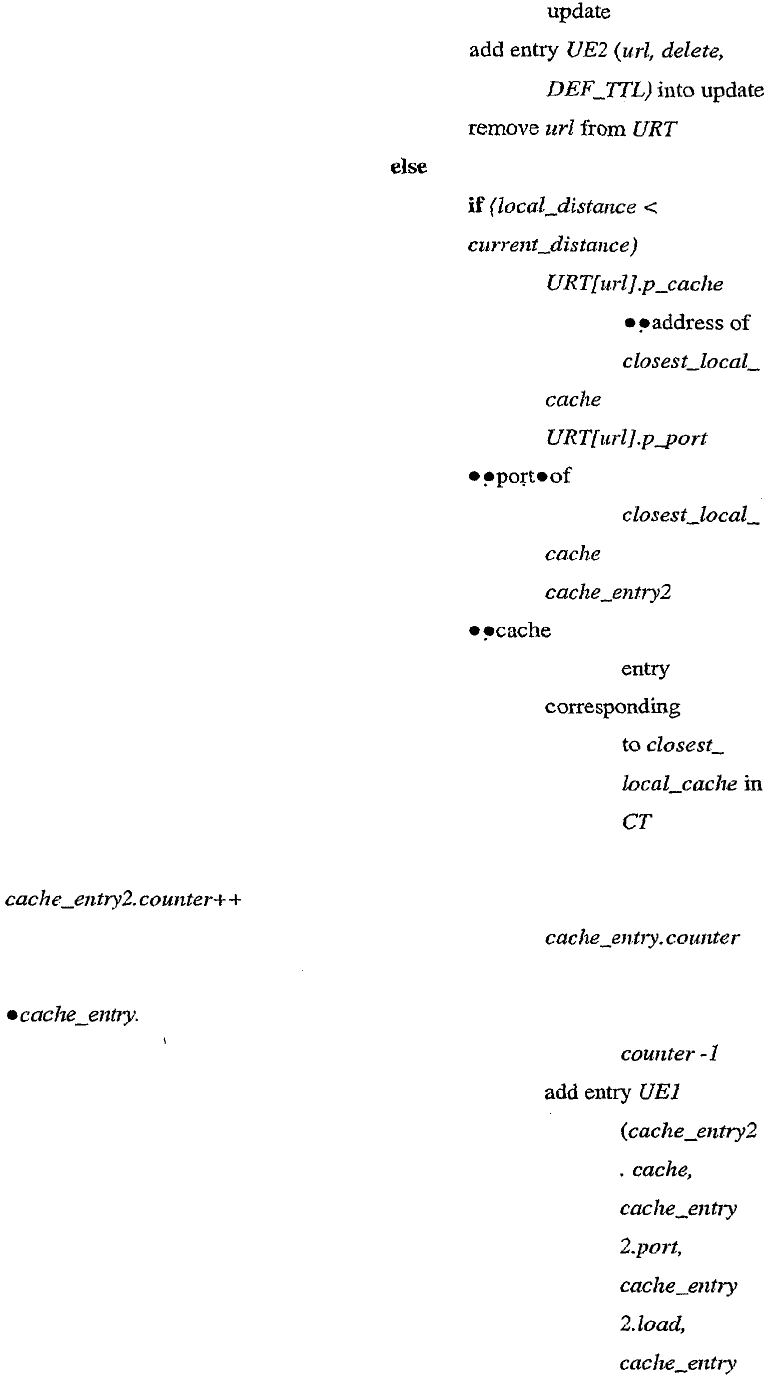

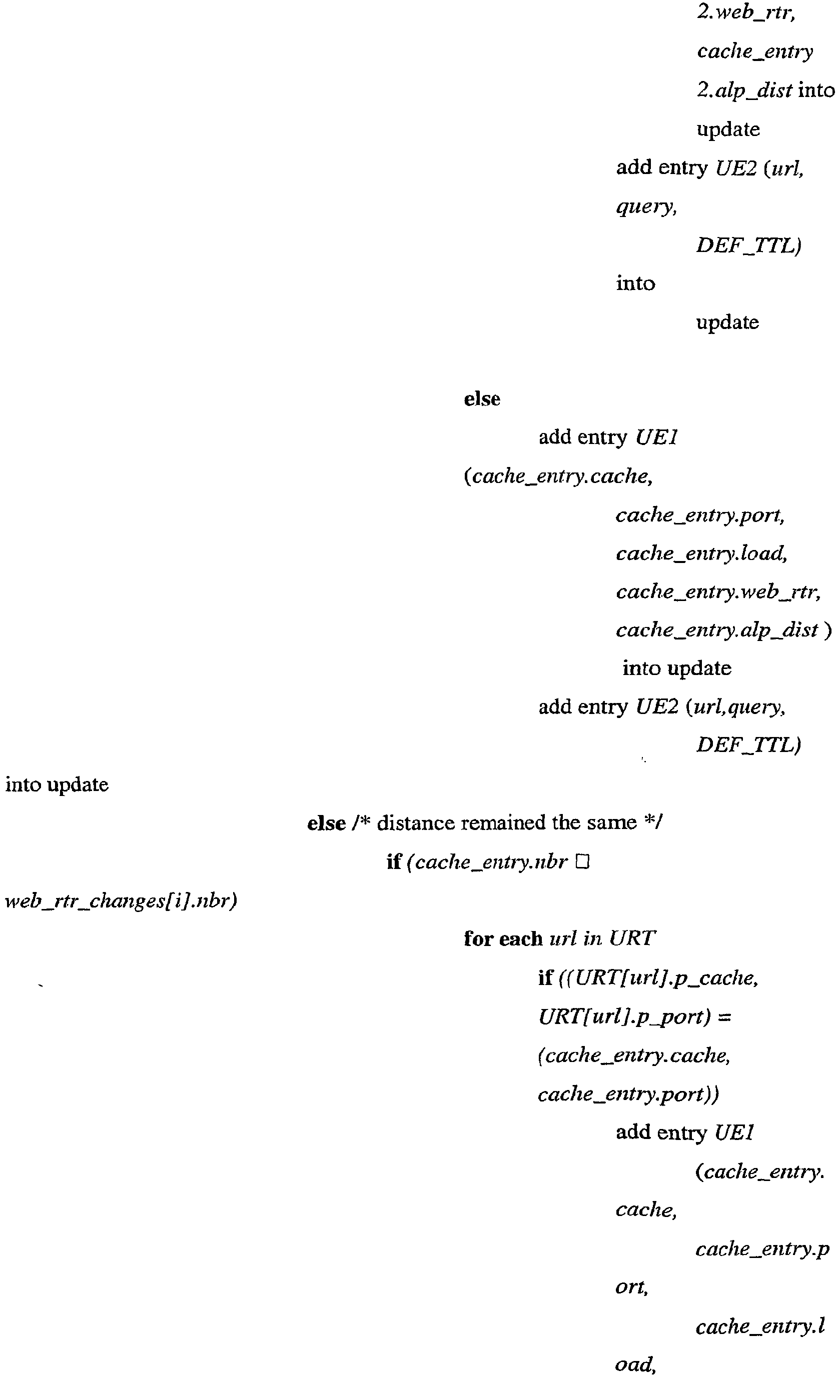

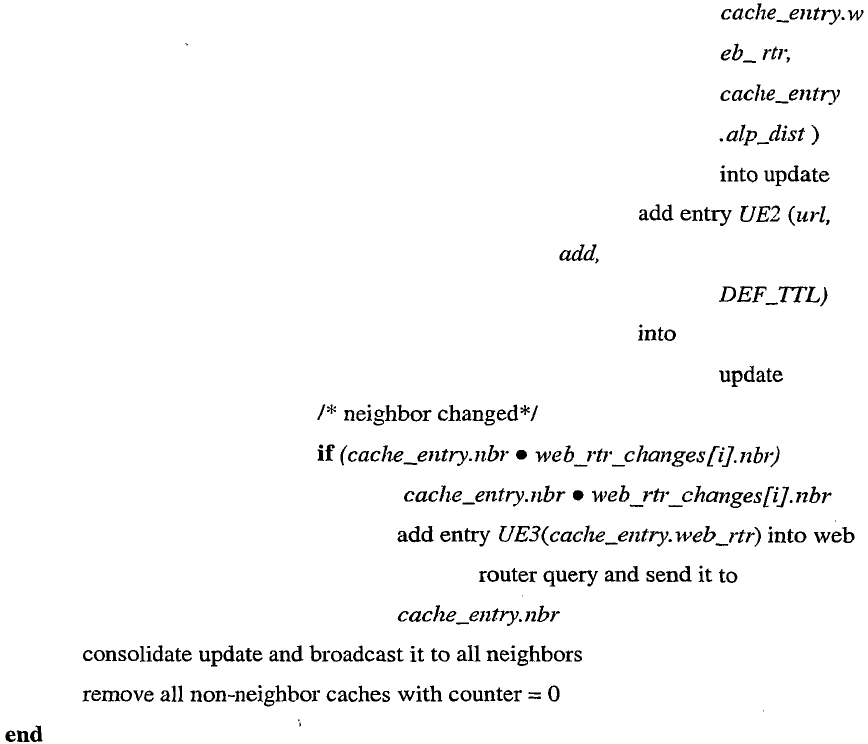

The following module is called when an update packet arrives from a neighbor Web router.

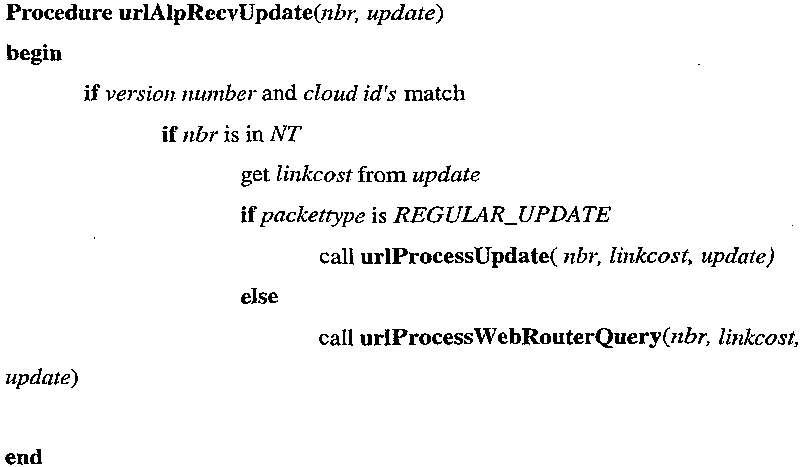

The following module is called when a Web router query arrives from a neighbor Web router.

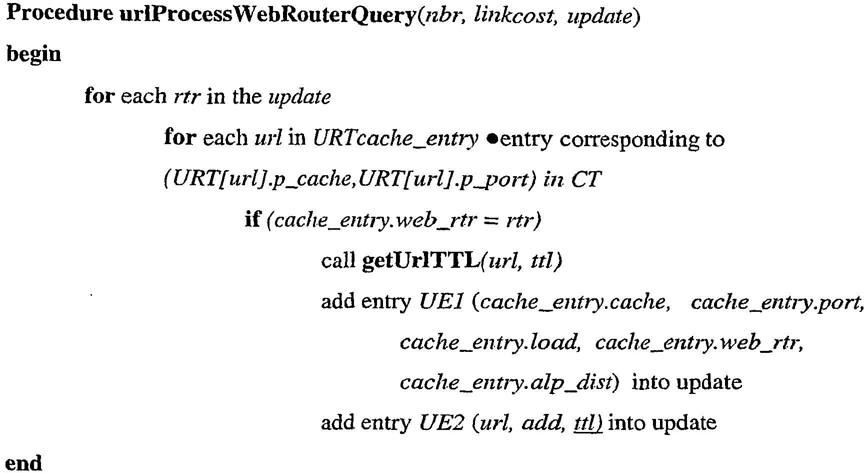

The following module is called when a regular update packet arrives from a neighbor Web router.

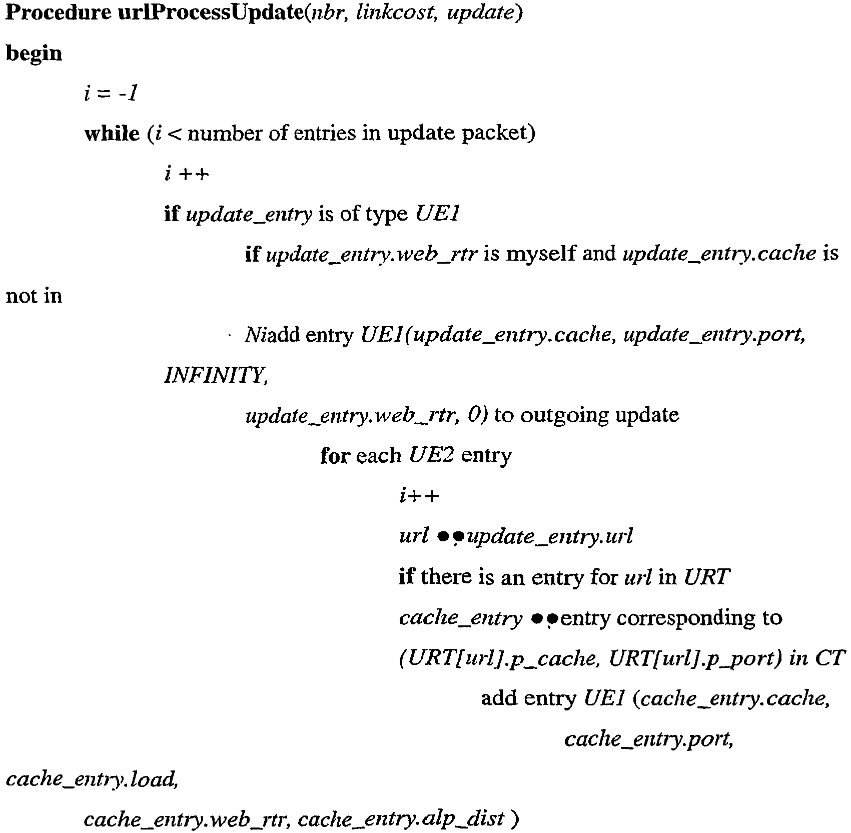

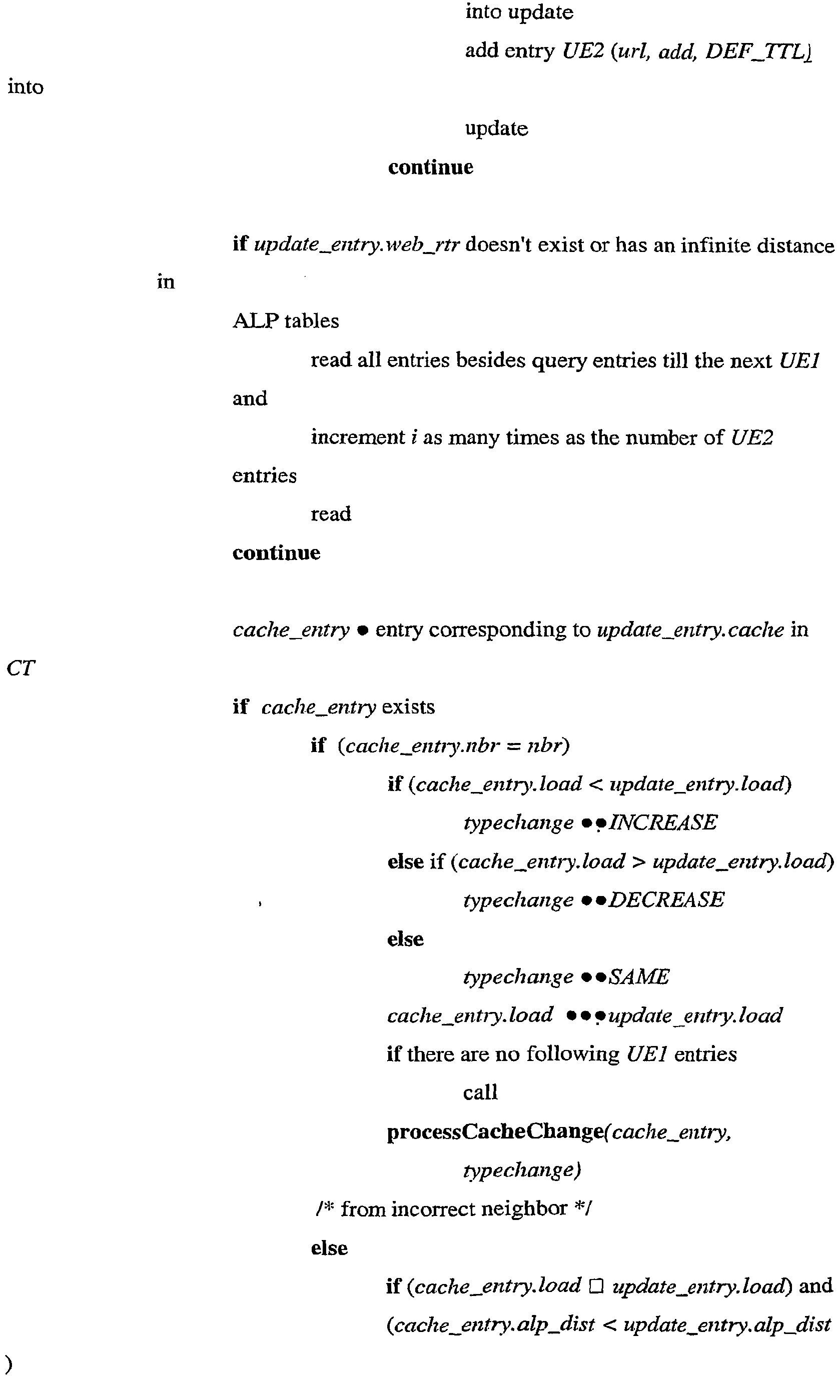

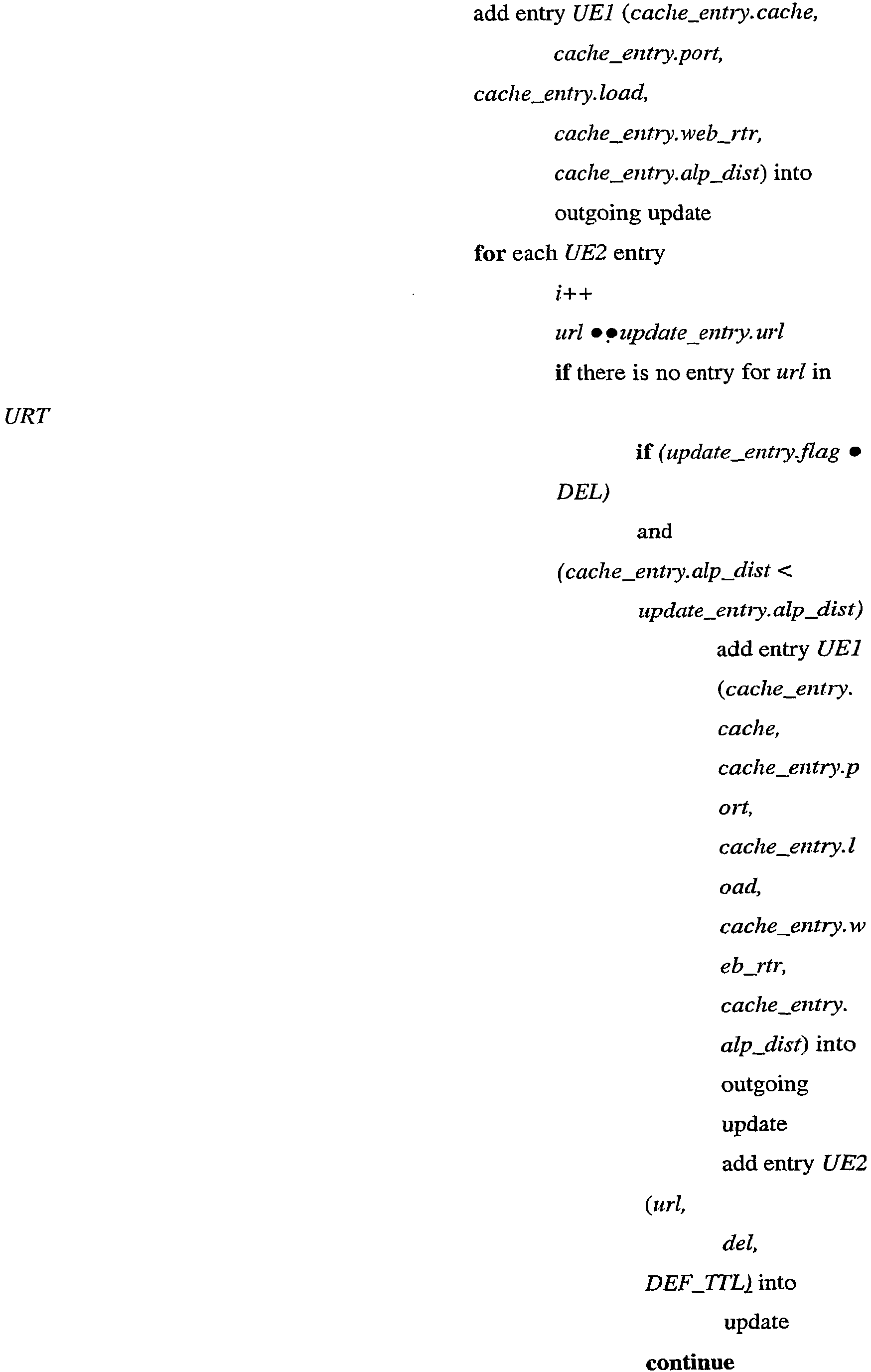

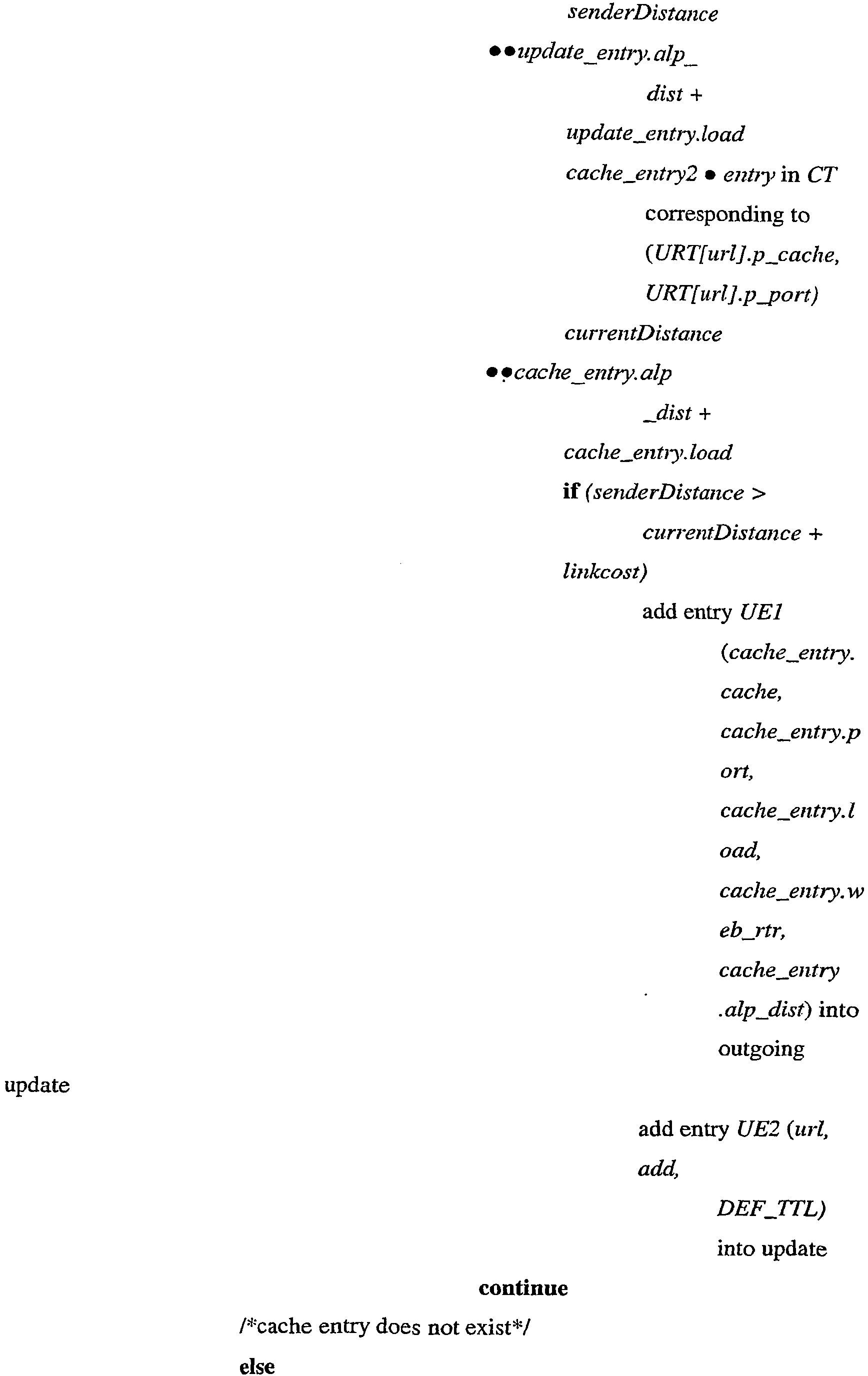

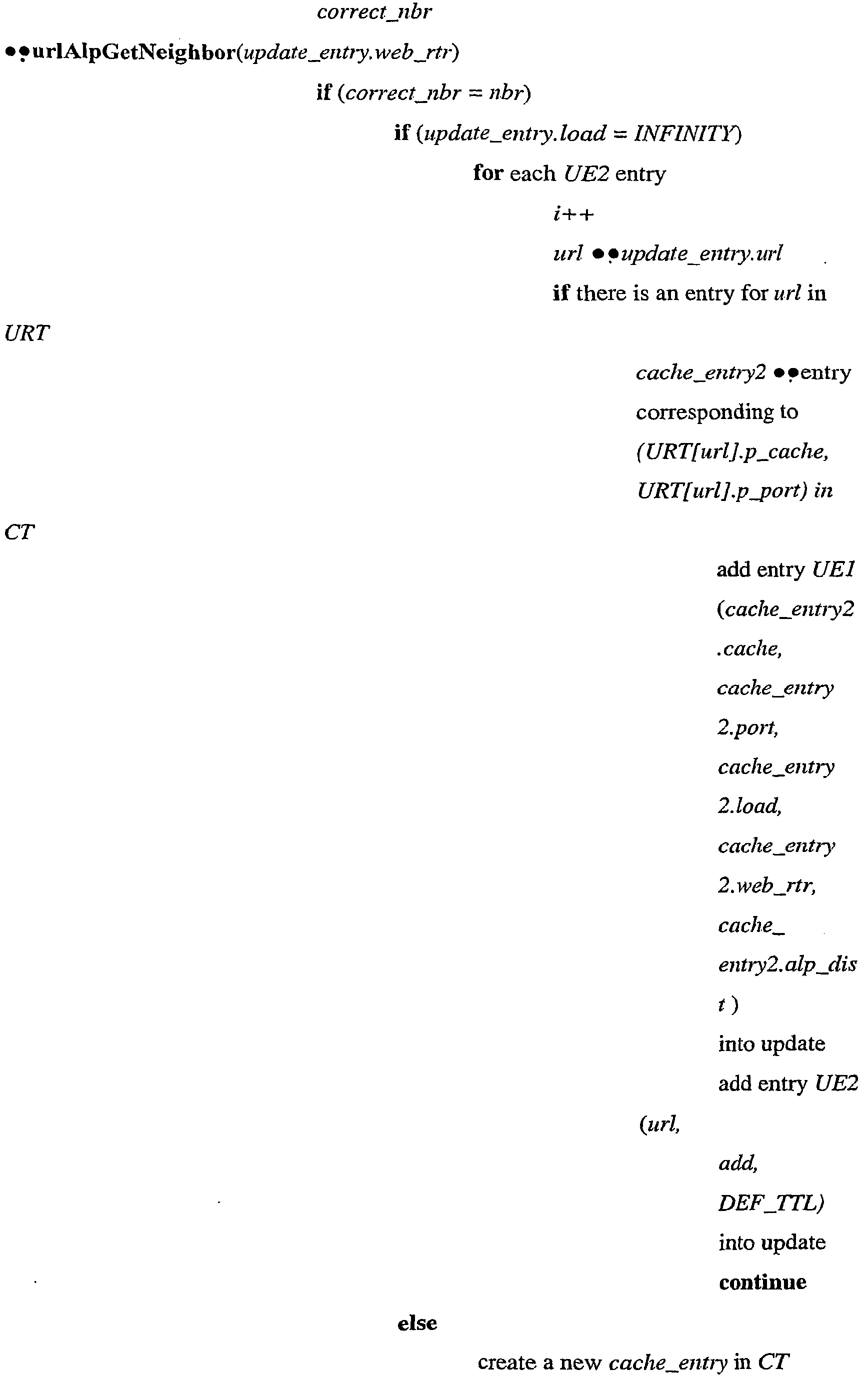

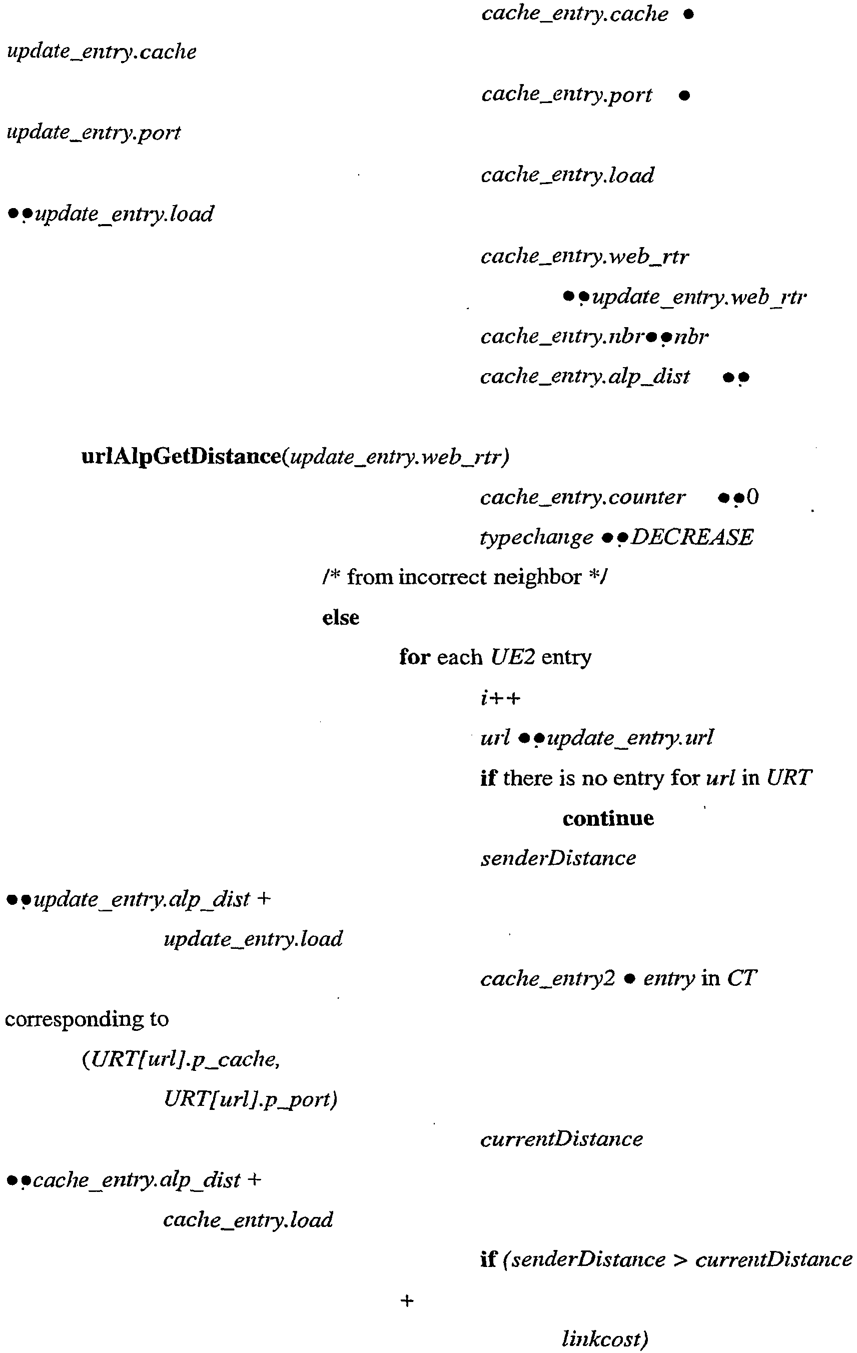

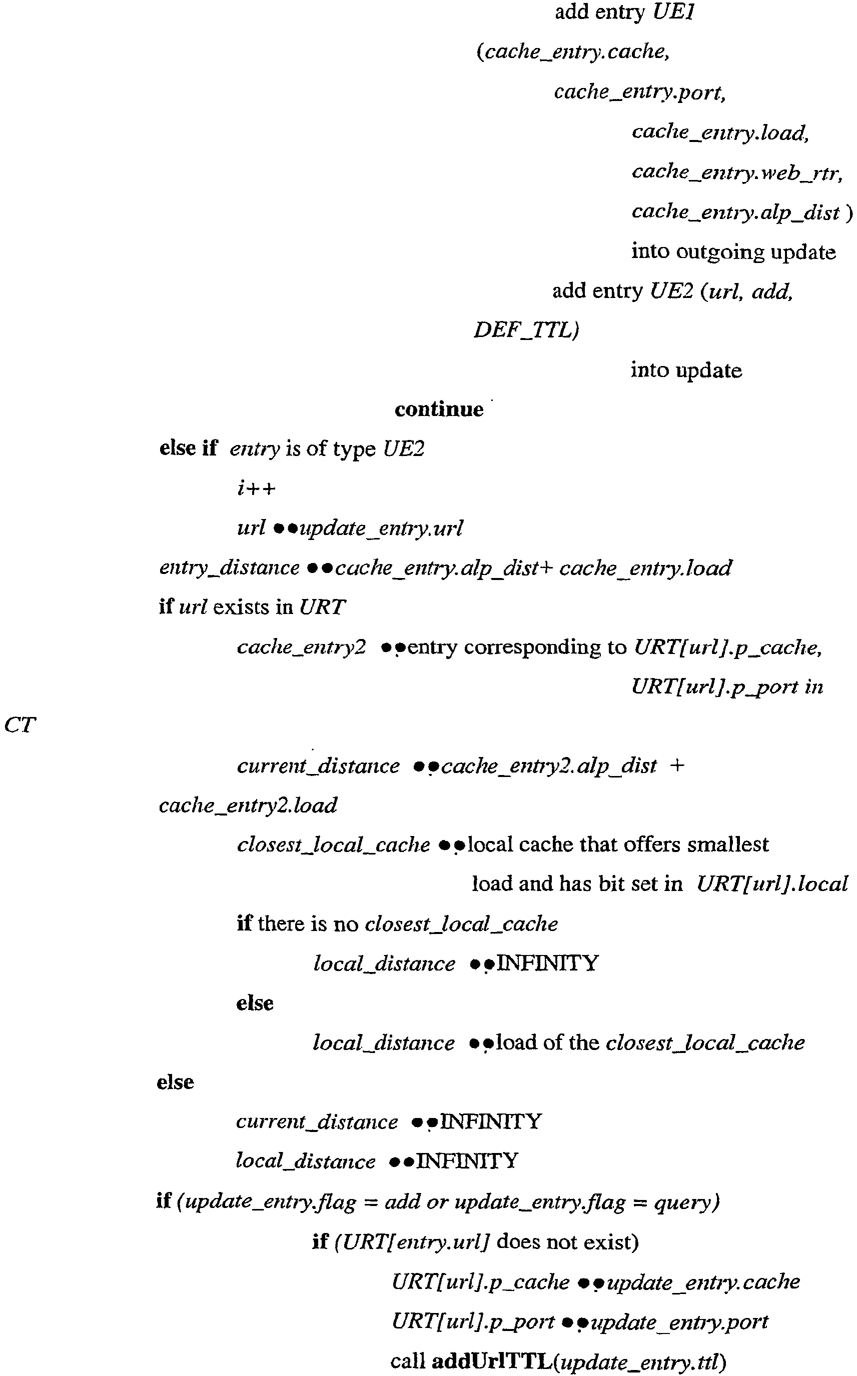

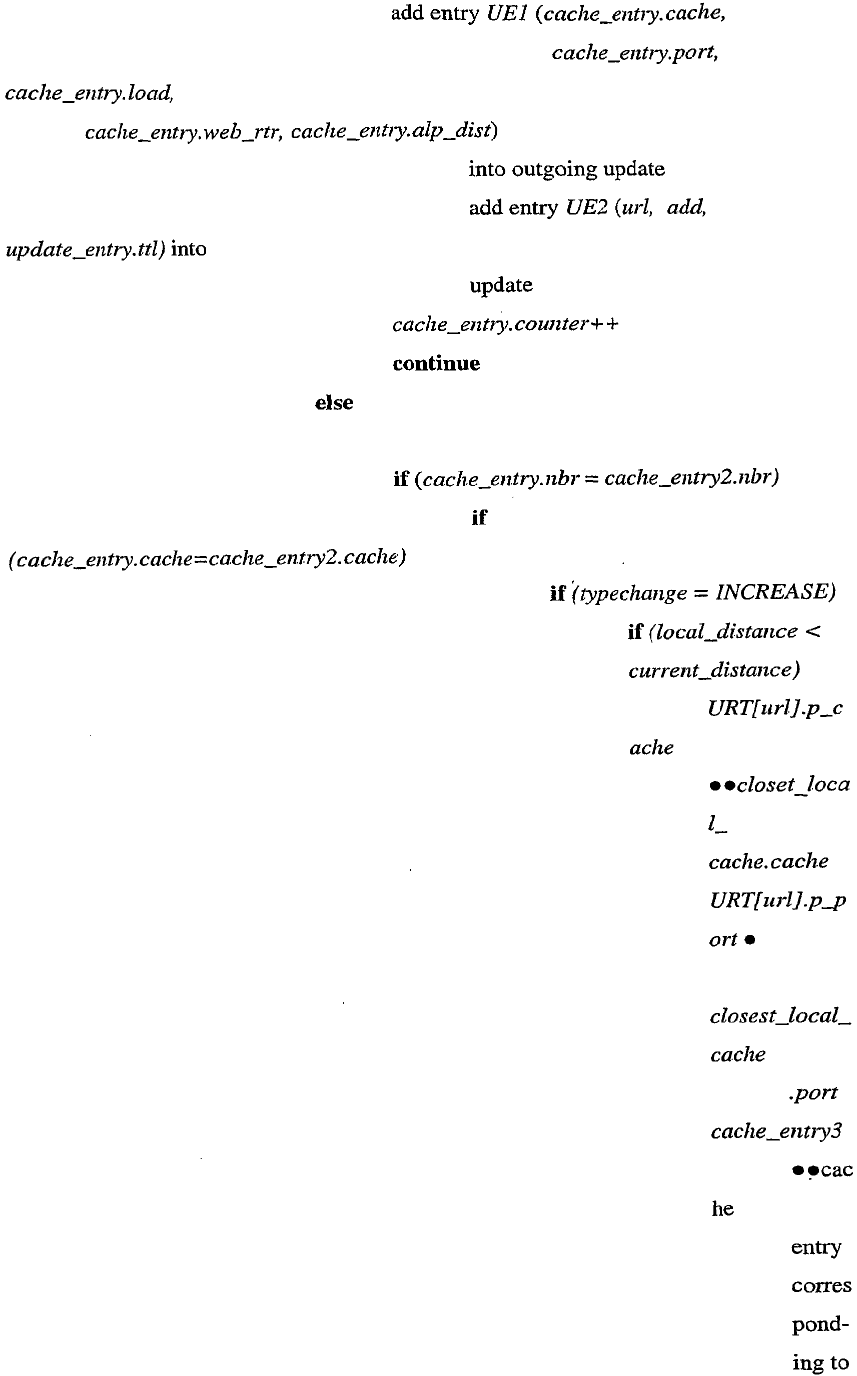

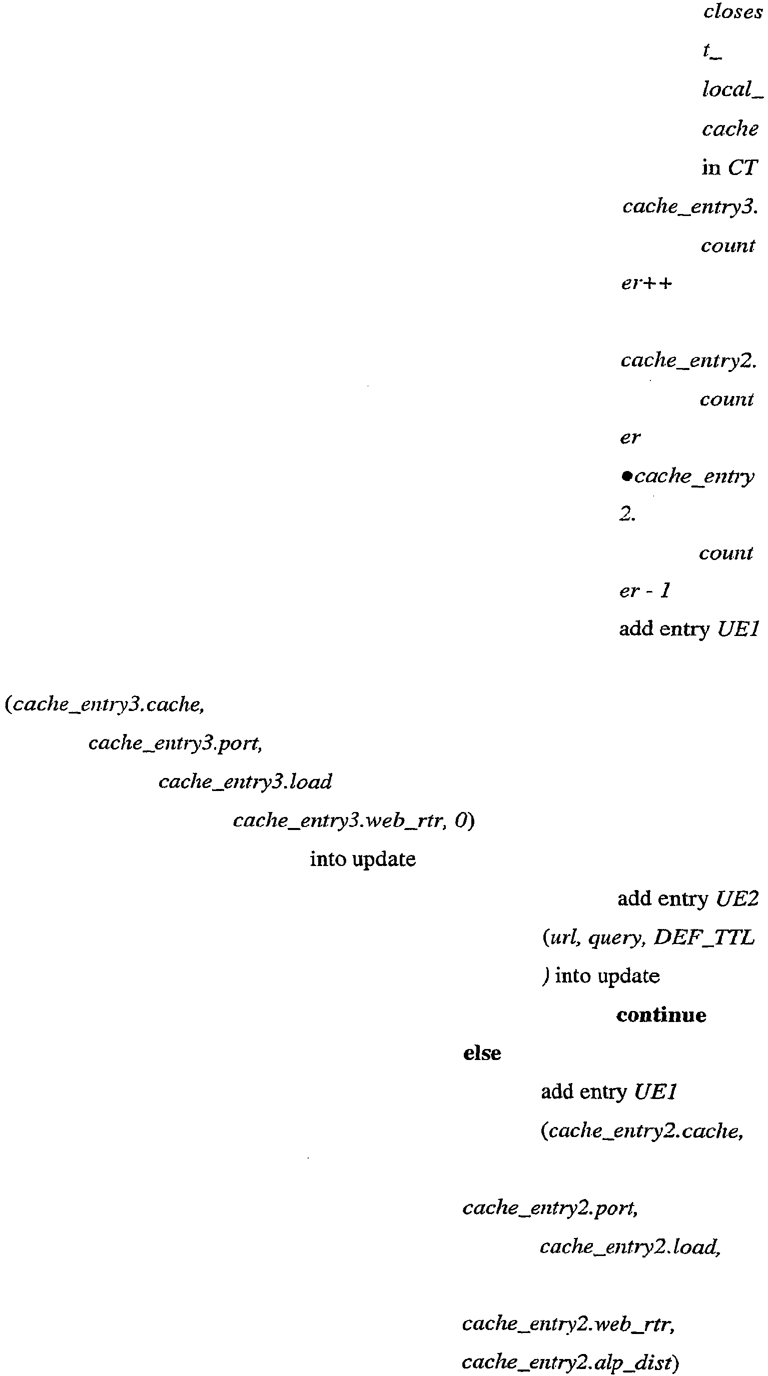

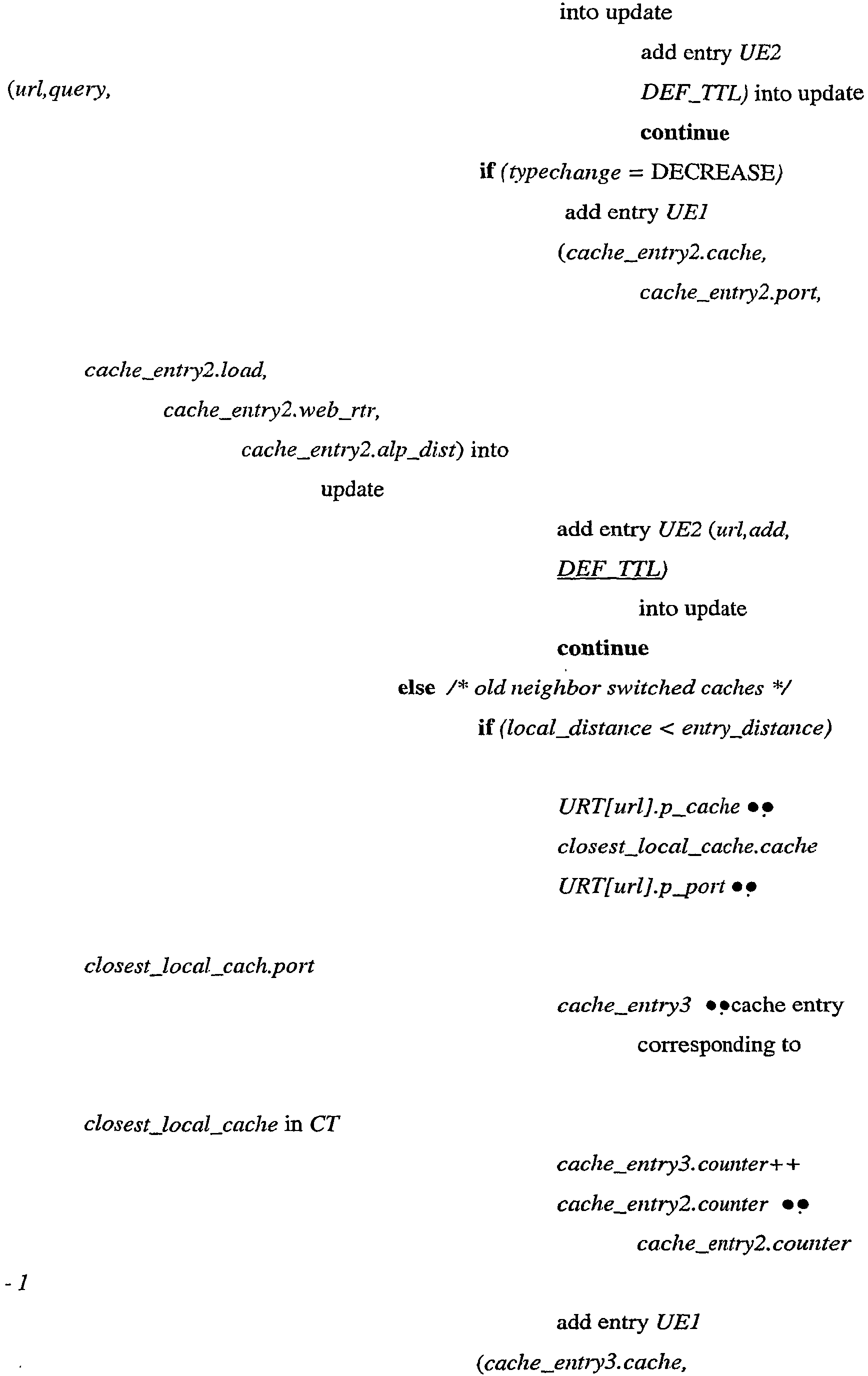

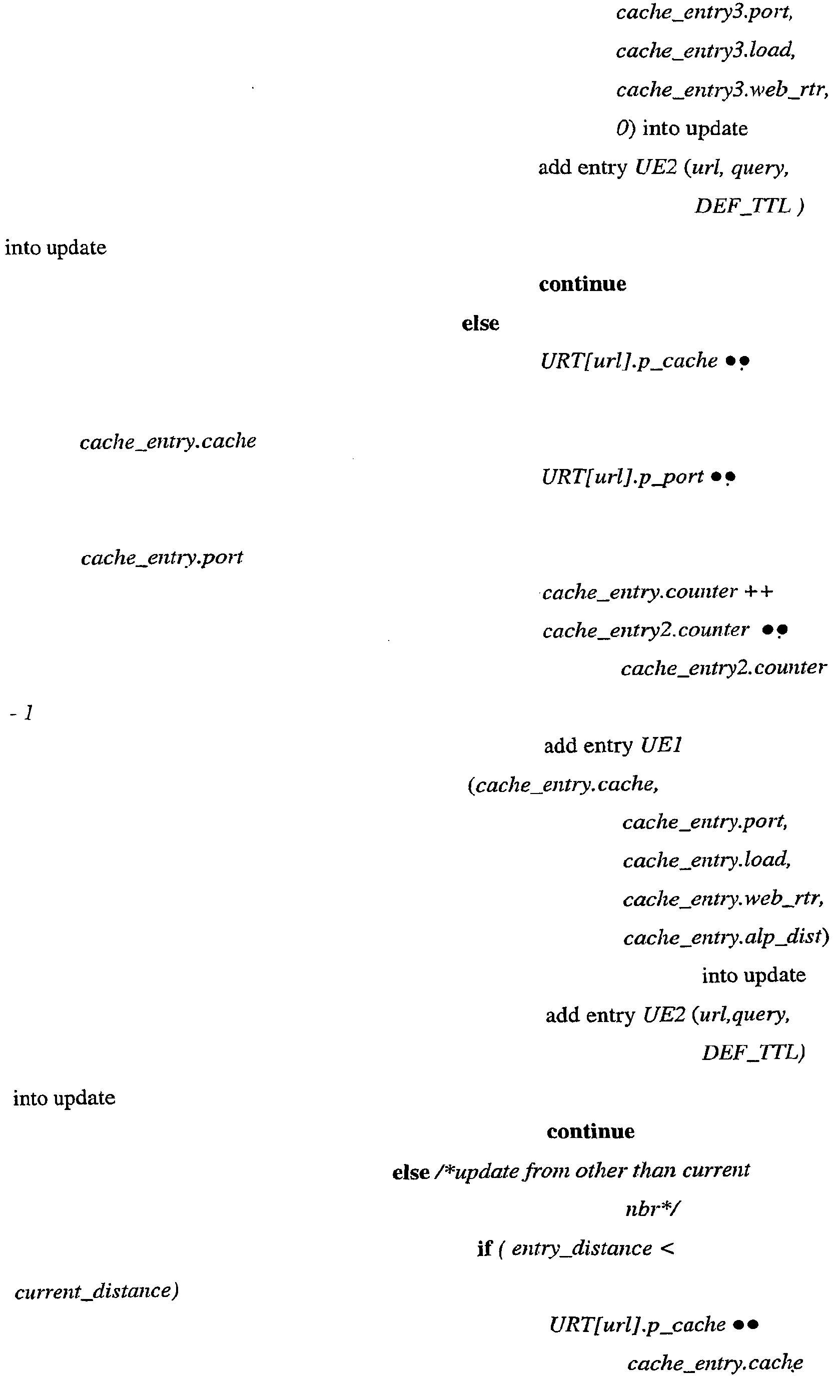

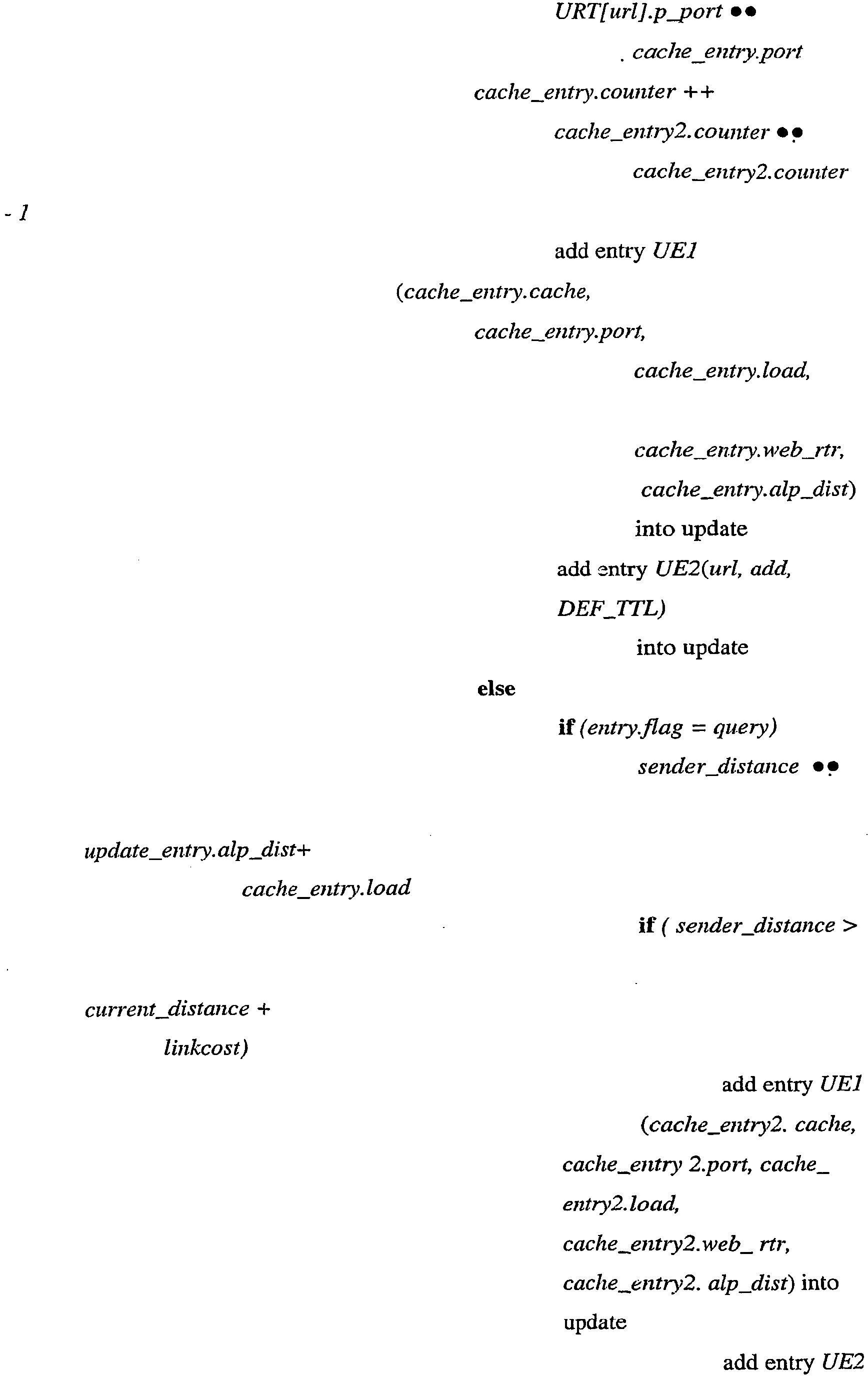

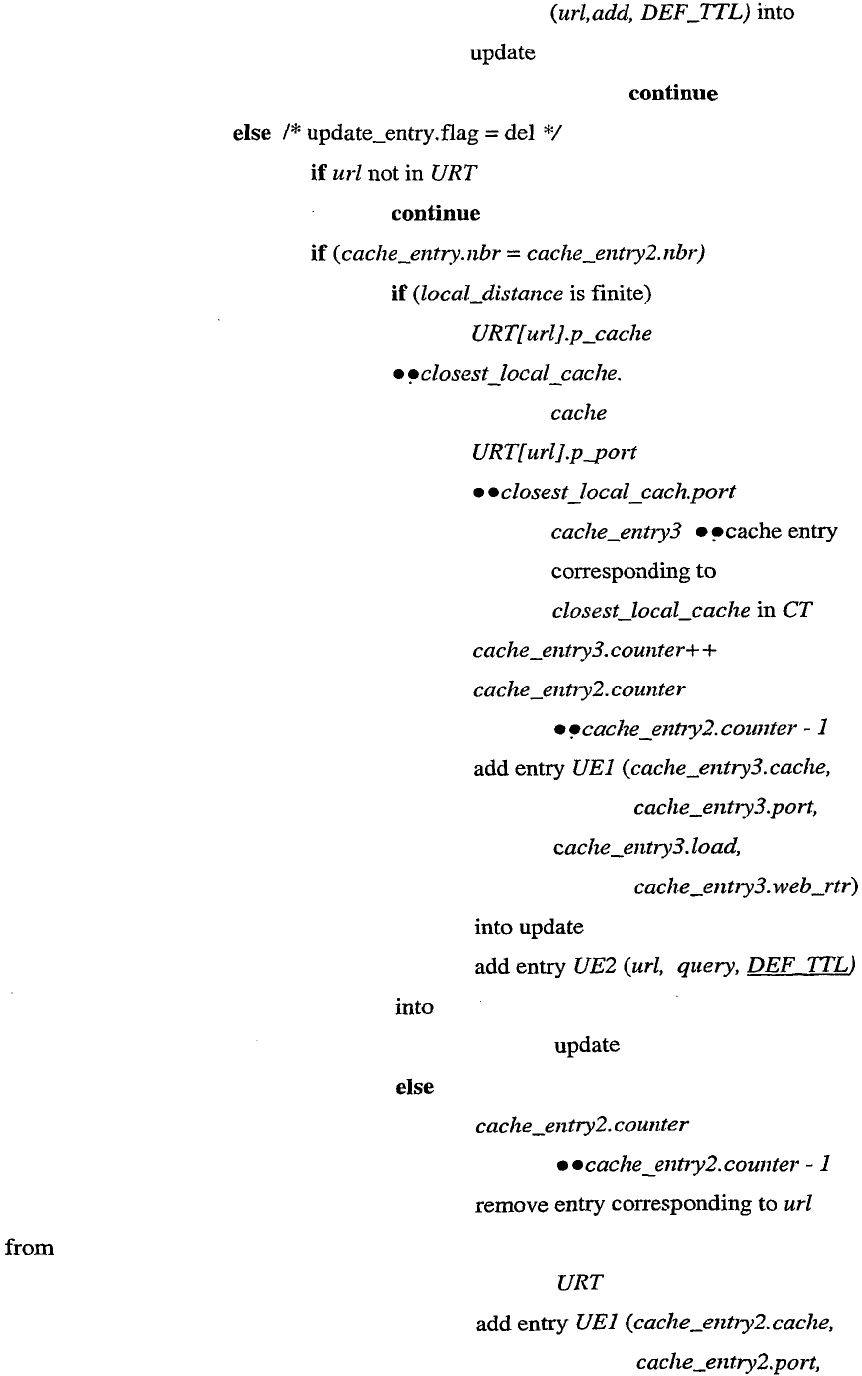

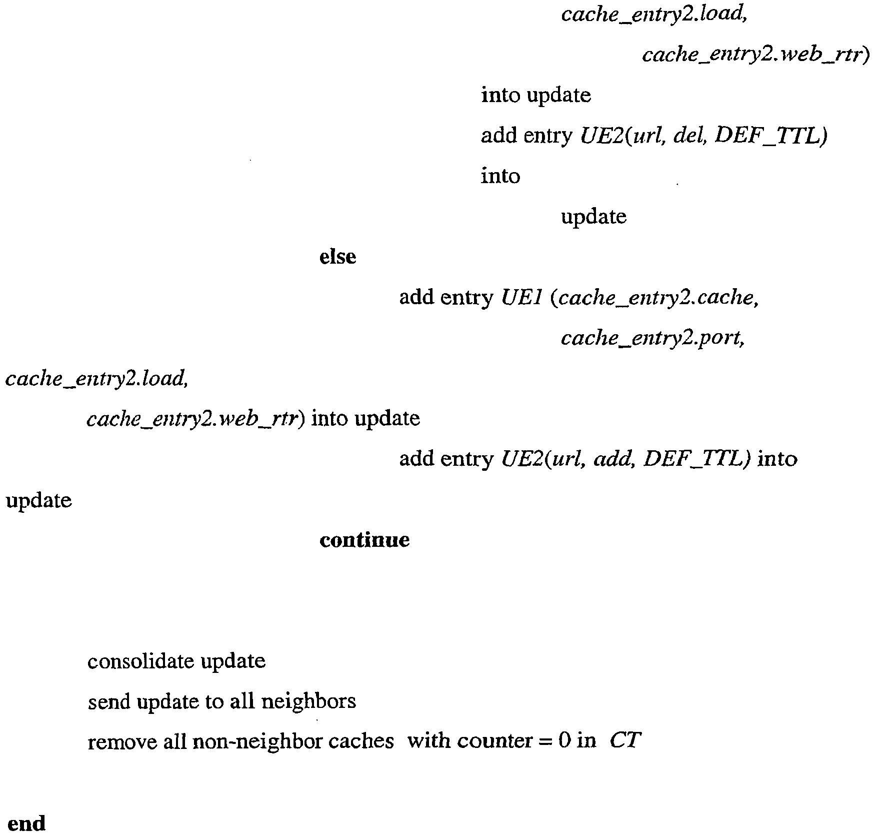

The following module is called when a single cache update arrives.

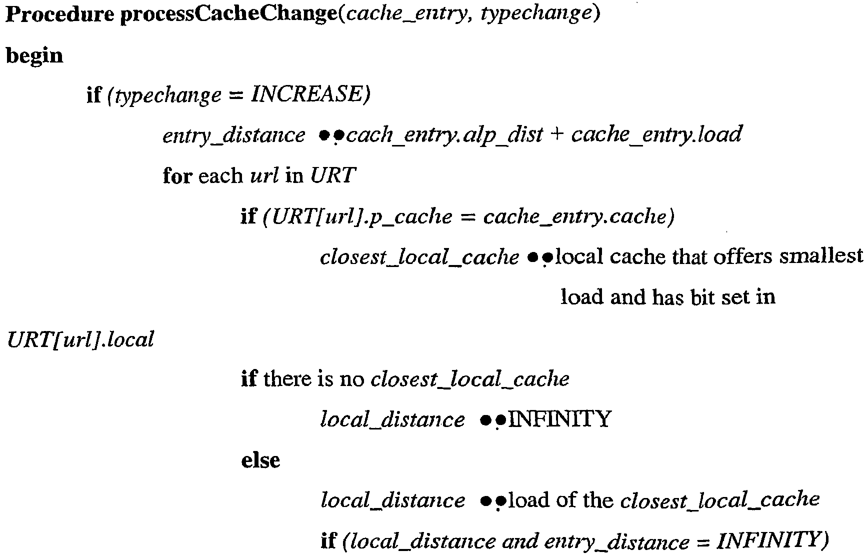

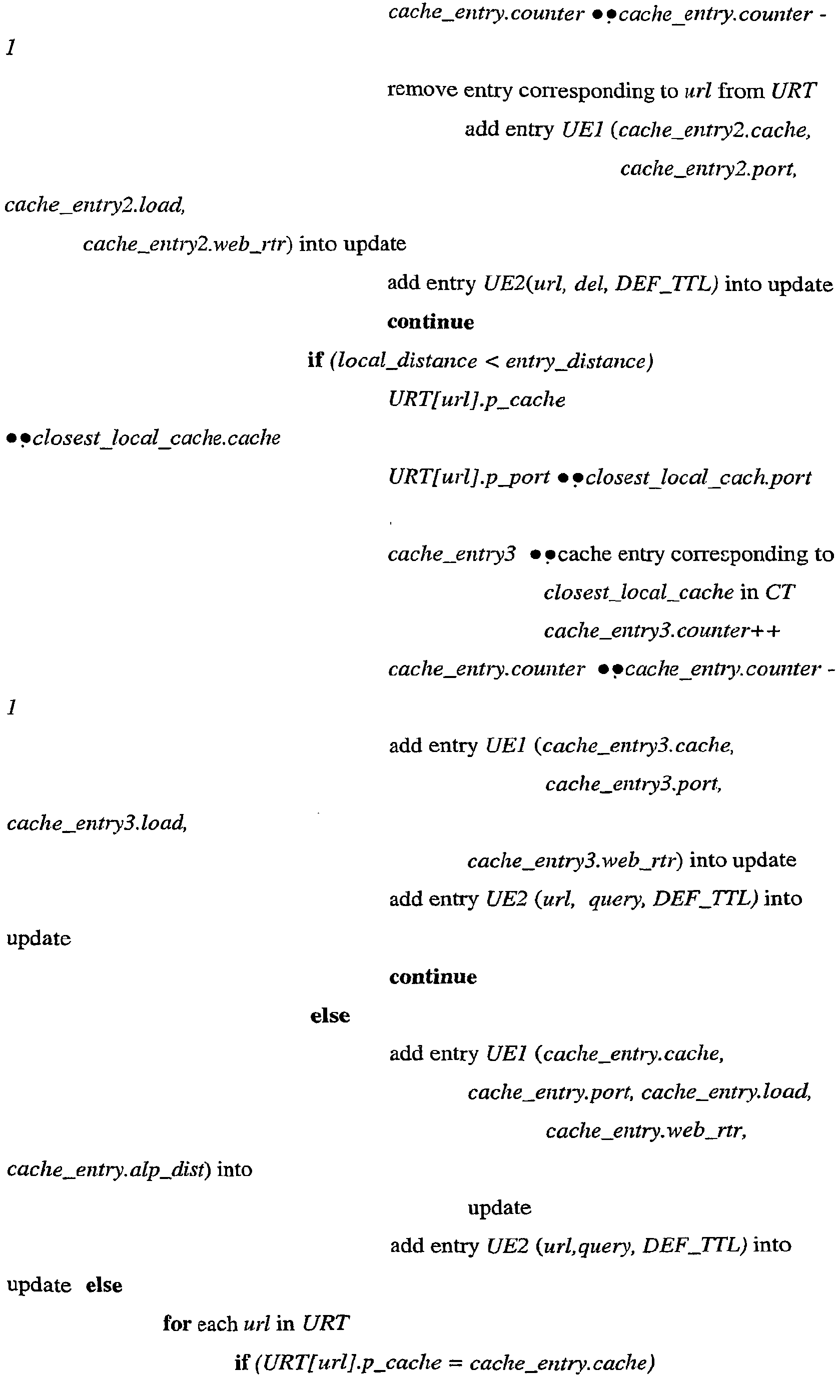

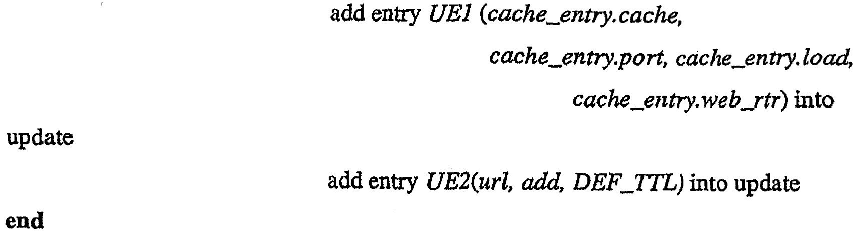

Thus a scheme for enabling the discovery of the caches and servers storing information objects distributed over computer networks, which can be implemented in hardware and/or software, has been described. It should be appreciated that some embodiments of the present invention make use of so-called network-layer URL (NURL) routing. This routing technique involves mapping requested URLs to unicast addresses, which are then used as an anycast IP address (i.e., a unicast address advertised by multiple, physically distinct points in an internet). See, e.g., Craig Partridge, Trevor Mendez, and Walter Milliken, "Host anycasting service", RFC 1546, November 1993. A system and method for using uniform resource locators (URLs) to map application layer content names to network layer anycast addresses, the aforementioned mapping, is disclosed in commonly-owned U.S. Provisional Application No. 60/200,511, entitled "System and Method for Using URLs to Map Application Layer Content Names to Network Layer Anycast Addresses", filed April 28, 2000 by J.J. Garcia-Luna-Aceves and Bradley R. Smith, now replaced by co-pending and commonly-owned U.S. patent Application No. 09/844,857, entitled "System and Method for Using Uniform Resource Locators to Map Application Layer Content Names to Network Layer Anycast Addresses", filed April 26, 2001 by J.J. Garcia-Luna-Aceves and Bradley R. Smith. Furthermore, a system and method for using network layer URL routing to locate the closest server carrying specific content (network-level routing of URLs) is disclosed in commonly-owned U.S. Provisional Application No. 60/200,402, entitled "System and Method for Using Network Layer URL Routing to Locate the Closest Server Carrying Specific Content (NURL Routing)", filed April 28, 2000 by J.J. Garcia-Luna-Aceves and Bradley R. Smith, now replaced by co-pending and commonly-owned U.S. Patent Application 09/844,856, entitled "System and Method for Using Network Layer Uniform Resource Locator Routing to Locate the Closest Server Carrying Specific Content", filed April 26,2001 by J.J. Garcia-Luna-Aceves and Bradley R. Smith..

With the route to the anycast cache server existing in the network infrastructure, a cache server processing a cache miss would like to transfer the content from the URL IP address. In an exemplary embodiment, in such a situation, the present invention resolves the anycast address to the server's real unicast address (which, by definition, uniquely identifies that server in the internet) before starting the download. In an exemplary embodiment, this is done by using an anycast address resolution protocol (AARP), which is disclosed in commonly-owned U.S. Provisional Application No. 60/200,403, entitled "System and Method for Resolving Network Layer Anycast Addresses to Network Layer Unicast Addresses (AARP)", filed April 28, 2000 by J.J. Garcia-Luna-Aceves and Bradley R. Smith, now replaced by co-pending and commonly-owned U.S. Patent Application No. 09/844,759, entitled "System and Method for Resolving Network Layer Anycast Addresses to Network Layer Unicast Addresses", filed April 26, 2001 by J.J. Garcia-Luna-Aceves and Bradley R. Smith.

Thus, although the foregoing description and accompanying figures discuss and illustrate specific embodiments, the present invention is to be measured only in terms of the claims that follow.

## Claims

1. A method, comprising:
returning, in response to a request from a client (110), an address of a first server (170, 208, 210, 212, 406) that should service a second server's (170, 208, 212, 406) request for an information object when the second server does not have the information object, the address of the first server being selected according to specified performance metrics, wherein the specified performance metrics comprise average processing delays at the first server, average delay from the first server to the second server, reliability of a path from the first server to the second server, and available bandwidth in said path from the first server to the second server;
referring the second server's request for the information object to a first Web router (400); and
configuring the first Web router having a Web Information Locator by Distance WILD module (402) to create a map that associates an identifier of the information object with the address of the first server according to the specified performance metrics and mappings generated by other Web routers and forwarded to the first Web router, wherein the mappings generated by the other Web routers are forwarded to the first Web router as inter-Web router communication messages passed between the Web routers using a WILD protocol, wherein the WILD module includes a neighbor protocol module (410) to receive changes in information object repository connectivity.

2. The method of claim 1 wherein the specified performance metrics comprise loads on the first server.

3. The method of claim 2 wherein the first server is an optimum server for servicing the second server's request because the first server offers a lowest response time in delivering the information object, according to the specified performance metrics, wherein upon receipt of an instruction to do so, the first server contacts an information object repository determined to store the information object, wherein the first server stores a copy of the information object, wherein the first server and the second server are coupled together through a virtual network.

4. The method of claim 1 wherein the map is generated by the first Web router according to the specified performance metrics, which comprise one or more of average delay from the first server to the second server, average processing delays at the first server, reliability of a path from the first server to the second server, available bandwidth in said path, and loads on the first server.

5. The method of claim 1 wherein one or more of the communication messages passed between the Web routers further report an associated address of one of the other Web routers co-located with an information object repository that contains the information object, wherein the mappings generated by other Web routers specify optimal associations of information object identifiers to information object repository addresses.

6. The method of claim 1 wherein the map is based on distance information obtained using a routing protocol that provides accurate distances from one Web router to another, the distance information being based on one or more of the specified performance metrics, wherein the routing protocol is at least one of: a diffusing update algorithm, DUAL; a loop-free path-finding algorithm, LPA; a link-vector algorithm, LVA; a bandwidth efficient source tree, BEST, protocol; a dynamic source tree, DST, routing protocol; a diffusing algorithm for shortest multipaths, DASM; a multipath distance vector algolithm, MDVA; a routing on-demand acyclic multipath, ROAM, protocol; a multiple-path partial-topology dissemination algorithm, MPDA; a multipath loop-free routing algorithm, MPATH; an adaptive link-state protocol, ALP; a topology broadcast protocol, such as the one implemented in the Open Shortest Path First protocol, OSPF; a path vector algorithm used as part of the Border Gateway Protocol, BGP; or a static table in the first Web router specifying the next hops or paths to one or more other active Web routers.

7. The method of claim 1 wherein the first Web router executes a communication protocol with which it determines: addresses of other Web routers participating in a virtual overlay network with the first Web router; and optimum distances to each Web router in the virtual overlay network, wherein the first Web router further determines neighbour Web routers that offer the optimum distances to each Web router in the virtual overlay network, wherein the first Web router updates the map according to messages received from other Web routers in the virtual overlay network, wherein the map is implemented as one or more tables stored in a computer readable medium.

8. A communication system, comprising:
a first Web router (202a-202h, 400) having a Web Information Locator by Distance WILD module (402); and
a second Web router and a third Web router, which are collectively the other Web routers, each coupled to the first Web router, wherein the first Web router, the second Web router, and the third Web router, which are collectively the Web routers, are arranged to pass one or more messages between the Web routers over a WILD protocol used for inter-Web router communication, said messages including information which allows the Web routers to dynamically update mappings of information objects to server addresses according to mappings generated by the other Web routers (202a-202h), the server addresses including an address of a first server (170, 208, 210, 212, 406) that should service a second server's request for an information object in response to the second server (170, 208, 212, 406) receiving a client requestor's request for the information object that is not located at the second server, the address of the first server being selected according to specified performance metrics, wherein the specified performance metrics comprise an average processing delay at the first server, average delay from the first server to the second server, reliability of a path from the first server to the second server, and available bandwidth in said path from the first server to the second server, wherein the WILD module includes a neighbor protocol module (410) to receive changes in information object repository connectivity.

9. The communication system of claim 8 wherein the mappings are optimal mappings of the information objects to the server addresses.

10. The communication system of claim 9 wherein the specified performance metrics comprise one or more of average delay from a server to another, an average processing delay at a server, reliability of a path from a server to another, available bandwidth in such a path, and loads on a server.

11. The communication system of claim 9 wherein said messages report updated distances from said server addresses to another information object, said distances being based on said specified performance metrics.

12. The communication system of claim 11 wherein said messages further report, for each updated distance, an associated server.

13. The communication system of claim 12 wherein said messages further report, for each updated distance, an associated address of the first Web router co-located with the first server that is a subject of the message.

14. The communication system of claim 8 wherein the Web routers dynamically update mappings in response to one or more of the following inputs: addition/deletion messages from an associated information object repository, changes in load messages from the associated information object repository, changes in information object repository connectivity information, URL updates from neighbor Web routers, changes in Web router neighbor connectivity information, changes in distances to other Web Routers, and URL lookup queries.

15. The communication system of claim 14 wherein in response to one or more of the inputs, the Web routers take one or more of the following actions; if an input offers a better distance to a URL than is currently maintained, change a corresponding routing table entry accordingly and transmit an add message; if an input offers a worse distance than a present routing table entry, ignore that input; if an input causes a loss of a last path, transmit a delete message; and if an input causes a distance increase, change a corresponding routing table entry accordingly and transmit a query.

## Patentansprüche

1. Verfahren, das aufweist:
Zurücksenden einer Adresse eines ersten Servers (170, 208, 210, 212, 406) als Reaktion auf eine Anforderung eines Clients (110), wobei der erste Server eine Anforderung eines zweiten Server Servers (170, 208, 212, 406) nach einem Informationsobjekt bedienen soll, wenn der zweite Server nicht im Besitz des Informationsobjekts ist, wobei die Adresse des ersten Servers gemäß einer festgelegten Leistungsmetrik ausgewählt wird und die festgelegte Leistungsmetrik durchschnittliche Verarbeitungsverzögerungen am ersten Server, eine durchschnittliche Verzögerung vom ersten Server zum zweiten Server, eine Zuverlässigkeit eines Pfads vom ersten Server zum zweiten Server und eine in dem Pfad vom ersten Server zum zweiten Server verfügbare Bandbreite umfasst,
Übergeben der Anforderung des zweiten Servers nach dem Informationsobjekt an einen ersten Webrouter (400) und Konfigurieren des ersten Webrouters, der ein Web Information Locator by Distance WILD Modul (402) aufweist, um eine Abbildung zu erzeugen, die eine Kennung des Informationsobjekts mit der Adresse des ersten Servers gemäß der festgelegten Leistungsmetrik und von anderen Webroutern erzeugten und dem ersten Webrouter übermittelten Abbildungen verknüpft, wobei die von den anderen Webroutern erzeugten Abbildungen an den ersten Webrouter in Form von Inter-Webrouter-Kommunikationsnachrichten übermittelt werden, die zwischen den Webroutern unter Verwendung eines WILD-Protokolls übertragen werden, wobei das WILD-Modul ein Nachbarprotokollmodul (410) zum Empfangen von Änderungen bei der Konnektivität des Informationsobjektspeichers aufweist.

2. Verfahren nach Anspruch 1, worin die festgelegte Leistungsmetrik Belastungen des ersten Servers umfasst.

3. Verfahren nach Anspruch 2, worin es sich bei dem ersten Server um einen Optimumserver handelt, der die Anforderung des zweiten Servers bedient, da die von dem ersten Server für die Lieferung des Informationsobjekts gebotene Antwortzeit gemäß der festgelegten Leistungsmetrik am kleinsten ist, wobei der erste Server bei Erhalt einer Anweisung dies zu tun einen Informationsobjektspeicher kontaktiert, von dem festgestellt wurde, dass das Informationsobjekt darin gespeichert ist, wobei der erste Server eine Kopie des Informationsobjekts speichert und der erste Server und der zweite Server über ein virtuelles Netzwerk miteinander verbunden sind.

4. Verfahren nach Anspruch 1, worin die Abbildung von dem ersten Webrouter gemäß der festgelegten Leistungsmetrik erzeugt wird, die eine oder mehrere durchschnittliche Verzögerungen vom ersten Server zum zweiten Server, durchschnittliche Verarbeitungsverzögerungen an dem ersten Server, die Zuverlässigkeit eines Pfades vom ersten Server zum zweiten Server, die in dem Pfad verfügbare Bandbreite und Belastungen des ersten Servers umfasst.

5. Verfahren nach Anspruch 1, worin eine oder mehrere zwischen den Webroutern übermittelte Kommunikationsnachrichten ferner eine zugehörige Adresse von einem der anderen Webrouter angeben, die sich bei dem Informationsobjektspeicher befinden, der das Informationsobjekt enthält, wobei die von den anderen Webroutern erzeugten Abbildungen optimale Verknüpfungen der Informationsobjektkennungen mit den Adressen der Informationsobjektspeicher spezifizieren.

6. Verfahren nach Anspruch 1, worin die Abbildung auf einer Distanzinformation basiert, die unter Verwendung eines Routingprotokolls erhalten wird, das eine genaue Distanz von einem Webrouter zu einem anderen angibt, wobei die Distanzinformation auf einer oder mehreren der festgelegten Leistungsmetriken basiert und wobei es sich bei dem Routingprotokoll um zumindest eines von Folgendem handelt: einen Diffusing Update Algorithm, DUAL, einen Loop-Free Path finding Algorithm, LPA, einen Link Vector Algorithm, LVA, ein Bandwidth Efficient Source Tree Protokoll, BEST, ein Dynamic Source Tree Routing Protokoll, DST, einen Diffusing Algorithm for Shortest Multipath, DASM, einen Multipath Distance Vector Algorithm, MDVA, ein Routing On-Demand Acyclic Multipath Protokoll, ROAM, einen Multiple-Path Partial-Topology Dissemination Algorithm, MPDA, einen Multipath Loop-Free Routing Algorithm, MPATH, ein Adaptive Link-State Protokoll, ALP, ein Topology Broadcast Protokoll, beispielsweise das in dem Open Shortest Path First Protokoll, OSPF, implementierte Protokoll, einen Path Vector Algorithm, der als Teil des Border Gateway Protocol, BGP, verwendet wird, oder eine statische Tabelle in dem ersten Webrouter, die die nächsten Hops oder Pfade zu einem oder mehreren anderen aktiven Webroutern festlegt.

7. Verfahren nach Anspruch 1, worin der erste Webrouter ein Kommunikationsprotokoll ausführt, mit dem er bestimmt:
Adressen anderer Webrouter, die an einem virtuellen Overlay-Netzwerk mit dem ersten Webrouter teilnehmen, und optimale Distanzen zu jedem Webrouter des virtuellen Overlay-Netzwerks,
wobei der erste Webrouter ferner Nachbarwebrouter bestimmt, die die optimalen Distanzen zu jedem Webrouter des virtuellen Overlay-Netzwerks bestimmen, wobei der erste Webrouter die Abbildung entsprechend von Nachrichten aktualisiert, die von anderen Webroutern des virtuellen Overlay-Netzwerks empfangen wurden, und wobei die Abbildung in Form einer oder mehrerer Tabellen realisiert ist, die in einem von einem Computer lesbaren Medium gespeichert sind.

8. Kommunikationssystem, das aufweist:
einen ersten Webrouter (202a-202h, 400), der ein Web Information Locator by Distance WILD Modul (402) aufweist, und
einen zweiten Webrouter und einen dritten Webrouter, die gemeinsam die anderen Webrouter bilden und jeweils mit dem ersten Webrouter verbunden sind, wobei der erste Webrouter, der zweite Webrouter und der dritte Webrouter, die gemeinsam die Webrouter bilden, dazu ausgebildet sind, eine oder mehrere Nachrichten zwischen den Webroutern über ein WILD-Protokoll zu übermitteln, das für eine Inter-Webrouter-Kommunikation verwendet wird, wobei die Nachrichten Informationen umfassen, die es den Webroutern ermöglichen, Abbildungen von Informationsobjekten auf Serveradressen dynamisch Abbildungen gemäß zu aktualisieren, die von den anderen Webroutern (202a-202h) erzeugt wurden, wobei die Serveradressen eine Adresse eines ersten Servers (170, 208, 210, 212, 406) umfassen, der eine Anforderung eines zweiten Servers nach einem Informationsobjekt als Reaktion darauf bedienen soll, dass der zweite Server (170, 208, 212, 406) von einem Clientanforderer eine Anforderung nach dem nicht auf dem zweiten Server befindlichen Informationsobjekt erhalten hat, wobei die Adresse des ersten Servers gemäß einer festgelegten Leistungsmetrik ausgewählt wird, und wobei die festgelegte Leistungsmetrik durchschnittliche Verarbeitungsverzögerungen am ersten Server, eine durchschnittliche Verzögerung vom ersten Server zum zweiten Server, eine Zuverlässigkeit eines Pfads vom ersten Server zum zweiten Server und eine in dem Pfad vom ersten Server zum zweiten Server verfügbare Bandbreite umfasst, und
wobei das WILD-Modul ein Nachbarprotokollmodul (410) zum Empfangen von Änderungen bei der Konnektivität des Informationsobjektspeichers aufweist.

9. Kommunikationssystem nach Anspruch 8, worin die Abbildungen optimale Abbildungen der Informationsobjekte auf die Serveradressen darstellen.

10. Kommunikationssystem nach Anspruch 9, worin die festgelegte Leistungsmetrik eine oder mehrere durchschnittliche Verzögerungen von einem Server zu einem anderen Server und/oder eine durchschnittliche Verarbeitungsverzögerung an einem Server und/oder die Zuverlässigkeit eines Pfades von einem Server zu einem anderen Server und/oder die in einem solchen Pfad verfügbare Bandbreite und/oder Belastungen eines Servers umfasst.

11. Kommunikationssystem nach Anspruch 9, worin die Nachrichten aktualisierte Distanzen von den Serveradressen zu einem anderen Informationsobjekt angeben, wobei die Distanzen auf der festgelegten Leistungsmetrik basieren.

12. Kommunikationssystem nach Anspruch 11, worin die Nachrichten für jede aktualisierte Distanz ferner einen zugehörigen Server angeben.

13. Kommunikationssystem nach Anspruch 12, worin die Nachrichten für jede aktualisierte Distanz ferner eine zugehörige Adresse des ersten Webrouters angeben, der sich bei dem ersten Server befindet, der einen Gegenstand der Nachricht bildet.

14. Kommunikationssystem nach Anspruch 8, worin die Webrouter Abbildungen infolge von einer oder mehreren der folgenden Eingaben dynamisch aktualisieren: Hinzufügen/Löschen von Nachrichten von einem zugehörigen Informationsobjektspeicher, Änderungen in Belastungsnachrichten von dem zugehörigen Informationsobjektspeicher, Änderungen der Informationsobjektspeicher-Konnektivitätsinformation, URL-Aktualisierungen von benachbarten Webroutern, Änderungen der Webrouter-Nachbar-Konnektivitätsinformation, Änderungen der Distanzen zu anderen Webroutern und URL Nachschlageabfragen.

15. Kommunikationssystem nach Anspruch 14, worin die Webrouter infolge von einer oder mehreren der Eingaben eine oder mehrere der folgenden Aktionen ausführen: wenn eine Eingabe eine bessere Distanz zu einer URL bietet, als gegenwärtig verwendet, dementsprechendes Ändern eines entsprechenden Routingtabelleneintrags und Übertragen einer Hinzufügungsnachricht; wenn die Eingabe eine schlechtere Distanz als ein vorhandener Routingtabelleneintrag bietet, Ignorieren einer Eingabe; wenn eine Eingabe zu einem Verlust eines vorhergehenden Pfades führt, Übertragen einer Löschnachricht; und, wenn eine Eingabe zu einer Vergrößerung einer Distanz führt, dementsprechendes Ändern eines entsprechenden Routingtabelleneintrags und Übertragen einer Abfrage.

## Revendications

1. Procédé comprenant :
le renvoi, en réponse à une demande d'un client (110), d'une adresse d'un premier serveur (170, 208, 210, 212, 406) qui devrait servir une demande d'un deuxième serveur (170, 208, 212, 406) pour un objet d'informations lorsque le deuxième serveur n'a pas l'objet d'informations, l'adresse du premier serveur étant sélectionnée conformément à des métriques de performance spécifiées, dans lequel les métriques de performance spécifiées comprennent des retards de traitement moyens au niveau du premier serveur, un retard moyen du premier serveur au deuxième serveur, la fiabilité d'un trajet du premier serveur au deuxième serveur, et une bande passante disponible dans ledit trajet du premier serveur au deuxième serveur ;
l'adressage de la demande du deuxième serveur pour l'objet d'informations à un premier routeur Web (400) ; et
la configuration du premier routeur Web comportant un module WILD (Web Information Locator by Distance) (402) pour créer une carte qui associe un identifiant de l'objet d'informations avec l'adresse du premier serveur conformément aux métriques de performance spécifiées et aux mappages générés par d'autres routeurs Web et envoyés au premier routeur Web, dans lequel les mappages générés par les autres routeurs Web sont envoyés au premier routeur Web en tant que messages de communication entre routeurs Web transférés entre les routeurs Web en utilisant un protocole WILD, dans lequel le module WILD comprend un module de protocole voisin (410) pour recevoir des changements de connectivité de référentiel d'objets d'informations.

2. Procédé selon la revendication 1, dans lequel les métriques de performance spécifiées comprennent les charges sur le premier serveur.

3. Procédé selon la revendication 2, dans lequel le premier serveur est un serveur optimal pour servir la demande du deuxième serveur parce que le premier serveur offre un temps de réponse le plus faible pour délivrer l'objet d'informations, conformément aux métriques de performance spécifiées, dans lequel, lors de la réception d'une instruction pour cela, le premier serveur contacte un référentiel d'objets d'informations déterminé pour mémoriser l'objet d'informations, dans lequel le premier serveur mémorise une copie de l'objet d'informations, dans lequel le premier serveur et le deuxième serveur sont couplés l'un à l'autre par l'intermédiaire d'un réseau virtuel.

4. Procédé selon la revendication 1, dans lequel la carte est générée par le premier routeur Web conformément aux métriques de performance spécifiées, qui comprennent un ou plusieurs d'un retard moyen du premier serveur au deuxième serveur, de retards de traitement moyens au niveau du premier serveur, d'une fiabilité d'un trajet du premier serveur au deuxième serveur, d'une bande passante disponible dans ledit trajet, et de charges sur le premier serveur.

5. Procédé selon la revendication 1, dans lequel un ou plusieurs des messages de communication transférés entre les routeurs Web rapportent en outre une adresse associée de l'un des autres routeurs Web copositionnés avec un référentiel d'objets d'informations qui contient l'objet d'informations, dans lequel les mappages générés par d'autres routeurs Web spécifient des associations optimales d'identifiants d'objet d'informations avec des adresses de référentiel d'objets d'informations.

6. Procédé selon la revendication 1, dans lequel la carte est basée sur des informations de distance obtenues en utilisant un protocole d'acheminement qui fournit des distances précises d'un routeur Web à un autre, les informations de distance étant basées sur une ou plusieurs des métriques de performance spécifiées, dans lequel le protocole d'acheminement est au moins l'un : d'un algorithme DUAL (diffusing update algorithm) ; d'un algorithme LPA (loop-free path-finding algorithm) ; d'un algorithme LVA (link-vector algorithm) ; d'un protocole BEST (bandwidth efficient source tree) ; d'un protocole d'acheminement DST (dynamic source tree) ; d'un algorithme DASM (diffusing algorithm for shortest multipath) ; d'un algorithme MDVA (multipath distance vector algorithm) ; d'un protocole ROAM (routing on-demand acyclic multipath) ; d'un algorithme MPDA (multiple-path partial-topology dissemination algorithm) ; d'un algorithme MPATH (multipath loop-free routing algorithm) ; d'un protocole ALP (adaptive link-state protocol) ; d'un protocole de diffusion de topologie, tel que celui mis en oeuvre dans le protocole OSPF (Open Shortest Path First) ; d'un algorithme de vecteur de trajet utilisé en tant que partie du protocole BGP (Border Gateway Protocol) ; ou d'une table statique dans le premier routeur Web spécifiant les sauts ou les trajets suivants vers un ou plusieurs autres routeurs Web actifs.

7. Procédé selon la revendication 1, dans lequel le premier routeur Web exécute un protocole de communication avec lequel il détermine : les adresses d'autres routeurs Web participant dans un réseau dédié virtuel avec le premier routeur Web ; et les distances optimales jusqu'à chaque routeur Web dans le réseau dédié virtuel, dans lequel le premier routeur Web détermine en outre les routeurs Web voisins qui offrent les distances optimales jusqu'à chaque routeur Web dans le réseau dédié virtuel, dans lequel le premier routeur Web met à jour la carte conformément aux messages reçus d'autres routeurs Web dans le réseau dédié virtuel, dans lequel la carte est mise en oeuvre en tant qu'une ou plusieurs tables mémorisées sur un support pouvant être lu par un ordinateur.

8. Système de communication, comprenant :
un premier routeur Web (202a à 202h, 400) comportant un module WILD (Web Information Locator by Distance) (402) ; et
un deuxième routeur Web et un troisième routeur Web, qui sont collectivement les autres routeurs Web, couplés chacun au premier routeur Web, dans lequel le premier routeur Web, le deuxième routeur Web et le troisième routeur Web, qui sont collectivement les routeurs Web, sont agencés pour transférer un ou plusieurs messages entre les routeurs Web sur le protocole WILD utilisé pour la communication entre routeurs Web, lesdits messages comprenant des informations qui permettent aux routeurs Web de mettre à jour dynamiquement les mappages des objets d'informations vers les adresses de serveur conformément aux mappages générés par les autres routeurs Web (202a à 202h), les adresses de serveur comprenant une adresse d'un premier serveur (170, 208, 210, 212, 406) qui devrait servir une demande du deuxième serveur pour un objet d'informations en réponse à la réception, par le deuxième serveur (170, 208, 212, 406), d'une demande du demandeur client pour l'objet d'informations qui n'est pas situé au niveau du deuxième serveur, l'adresse du premier serveur étant sélectionnée conformément à des métriques de performance spécifiées, dans lequel les métriques de performance spécifiées comprennent un retard de traitement moyen au niveau du premier serveur, un retard moyen du premier serveur au deuxième serveur, une fiabilité d'un trajet du premier serveur au deuxième serveur, et une bande passante disponible dans ledit trajet du premier serveur au deuxième serveur, dans lequel le module WILD comprend un module de protocole voisin (410) pour recevoir des changements de connectivité de référentiel d'objets d'informations.

9. Système de communication selon la revendication 8, dans lequel les mappages sont des mappages optimaux des objets d'informations vers les adresses de serveur.

10. Système de communication selon la revendication 9, dans lequel les métriques de performance spécifiées comprennent un ou plusieurs d'un retard moyen d'un serveur à un autre, d'un retard de traitement moyen au niveau d'un serveur, d'une fiabilité d'un trajet d'un serveur à un autre, d'une bande passante disponible dans un tel trajet, et de charges sur un serveur.

11. Système de communication selon la revendication 9, dans lequel lesdits messages rapportent les distances mises à jour desdites adresses de serveur à un autre objet d'informations, lesdites distances étant basées sur lesdites métriques de performance spécifiées.

12. Système de communication selon la revendication 11, dans lequel lesdits messages rapportent en outre, pour chaque distance mise à jour, un serveur associé.

13. Système de communication selon la revendication 12, dans lequel lesdits messages rapportent en outre, pour chaque distance mise à jour, une adresse associée du premier routeur Web copositionné avec le premier serveur qui est un sujet du message.

14. Système de communication selon la revendication 8, dans lequel les routeurs Web mettent à jour dynamiquement les mappages en réponse à une ou plusieurs des entrées suivantes : des messages d'ajout/suppression d'un référentiel d'objets d'informations associé, des changements de messages de charge du référentiel d'objets d'informations associé, des changements d'informations de connectivité de référentiel d'objets d'informations, des mises à jour d'adresse Web des routeurs Web voisins, des changements d'informations de connectivité de voisin de routeur WEB, des changements des distances jusqu'à d'autres routeurs Web, et des interrogations de correspondance d'adresse Web.

15. Système de communication selon la revendication 14, dans lequel, en réponse à une ou plusieurs des entrées, les routeurs Web prennent une ou plusieurs des actions suivantes : si une entrée offre une meilleure distance jusqu'à une adresse Web que celle actuellement conservée, changer une entrée de table d'acheminement correspondante en conséquence et transmettre un message d'ajout ; si une entrée offre une distance plus mauvaise qu'une entrée de table d'acheminement actuelle, ignorer cette entrée ; si une entrée provoque une perte d'un dernier trajet, transmettre un message de suppression ; et si une entrée provoque une augmentation de distance, changer une entrée de table d'acheminement correspondante en conséquence et transmettre une interrogation.
